Europäisches Patentamt

European Patent Office

Office européen des brevets

(11) Publication number: **0 610 938 A1**

# EUROPEAN PATENT APPLICATION

(21) Application number: **94102081.0**

(22) Date of filing: **10.02.94**

(51) Int. Cl.5: **G06F 15/80**, G06F 15/16

(30) Priority: **11.02.93 US 993383**

(43) Date of publication of application:
**17.08.94 Bulletin 94/33**

(84) Designated Contracting States:
**CH DE FR GB IT LI**

(71) Applicant: **UNIVERSITIES RESEARCH ASSOCIATION, INC.**
**1111 19th Street N.W., Suite 400**
**Washington, D.C. 20036 (US)**

(72) Inventor: **Crosetto, Dario Bartolomeo**
**900 Hideaway Pl.**
**DeSoto, Texas 75115 (US)**

(74) Representative: **Patentanwälte Grünecker, Kinkeldey, Stockmair & Partner**
**Maximilianstrasse 58**
**D-80538 München (DE)**

(54) **Three dimensional flow processor.**

(57) In accordance with the present invention, a three dimensional flow processor (600) is disclosed, comprising a central processing unit (602-610), a first plurality of buses (A', B', C') coupled to the central processing unit, an input data port (634) coupled to at least one of the first plurality of buses and an output data port (628) coupled to at least one of the first plurality of buses, wherein data appearing on the input data port is routed to the output data port if the central processing unit is busy. Other systems, devices and methods are disclosed.

FIG. 7

This invention was made with Government support under contract No. DE-AC02-89ER40486 between Universities Research Association, Inc. and the Department of Energy. The Government has certain rights in this invention.

**TECHNICAL FIELD OF THE INVENTION**

The present invention relates to parallel processing architectures and more particularly to parallel processing architectures suitable for data sharing in an array, pattern recognition within a data array and sustaining a data input rate which is higher than the pattern recognition algorithm execution time.

**BACKGROUND OF THE INVENTION**

The background of the present invention is described in relation to high energy particle physics experimentation by way of illustration only.

There is a need in many fields to identify objects in a one-, two-, or three-dimensional system which generates information at a rate which is higher than the rate at which state-of-the-art programmable devices (processors) can execute different pattern recognition algorithms. These processors implement such algorithms by using different sequences of instructions from a fixed instruction set (i.e. a program). For example, in the field of medical image processing, there is an emphasis on acquiring data at extremely high rates (e.g. to cope with the patient metabolism). Also, in the field of industrial quality control, there may be fast production streams in which a pattern recognition system must be able to detect imperfections, faulty objects, misplaced objects or misaligned objects. There is also a similar need in the military field, where it is sometimes critical to identify a target moving at a very high speed (e.g. distinguishing between an airplane and a missile). Similar problems may no doubt be identified in a multitude of other areas.

One such important example is the field of high energy particle physics research. It is characteristic of high energy particle physics experimentation that very large amounts of data must be processed in very short spans of time. For example, experiments at the Superconducting Super Collider (SSC) accelerator, now under construction in Ellis County, Texas, will have an average of 1.6 interactions during a proton beam crossing which occurs every 16 nanoseconds (ns.). Several types of subdetectors (calorimeter, shower maximum detector, central tracking and muon system, for example) will send information to the initial triggering mechanism (the Level 1 trigger) which must be able to distinguish between events of interest and background events occurring at a rate of 60 Mhz.

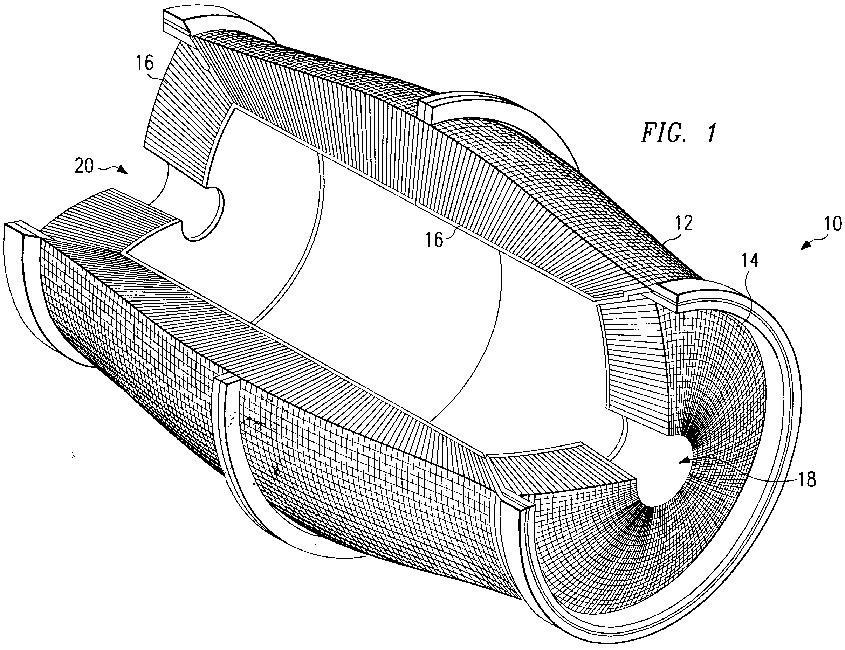

For example, calorimeters are used as means to detect energy emissions regarding electrons, photons, jets and missing $E_t$ (such as neutrino) resulting from proton beam collisions in an accelerator and this detection necessarily produces large quantities of parallel data. See, for example, Solenoidal Detector Collaboration Technical Design Report, SDC-92-201, April 1, 1992, which is hereby incorporated herein by reference in its entirety. FIG. 1 is a cut-away illustration a typical calorimeter, indicated generally at 10. The calorimeter 10 comprises three main sections, the barrel 12, end cap 14 and end cap 16. The calorimeter 10 is placed in the path of the accelerator ring so that two proton particle beams collide in the center of the calorimeter 10 every 16.6 nanoseconds (ns.), emitting particles in all three dimensions. Because the calorimeter 10 almost completely surrounds any proton beam collision occurring within the calorimeter, its inside surface is impinged with nearly all of the particles emitted by such collision. Only the relatively small openings 18, 20 allow particles to escape without impinging the calorimeter's inside surface.

The inside surface of the calorimeter 10 is completely covered with approximately 80,000 to 120,000 sensors 16 (e.g. photomultipliers). Absorption plates are interposed between the sensors 16 in order to provide isolation from one to the next. The sensors 16 sense particles arriving at their location and produce an output signal indicative of both the type of particle and its relative energy. The outputs from each of the 80,000 to 120,000 sensors 16 are representative of a three dimensional snapshot of the particle collision within the calorimeter 10.

Because of the fast decision required of the Level 1 trigger, the calorimeter 10 data is sent to it in macro-granularity form (the 80,000 to 120,000 signals are segmented, significantly reducing the number of signals sent to the Level 1 trigger) rather than full granularity form (all 80,000 to 120,000 signals sent individually). This is accomplished by segmenting the sensors 16 into groups, or "trigger towers" which are analog or digital sums of several individual signals from the calorimeter 10.

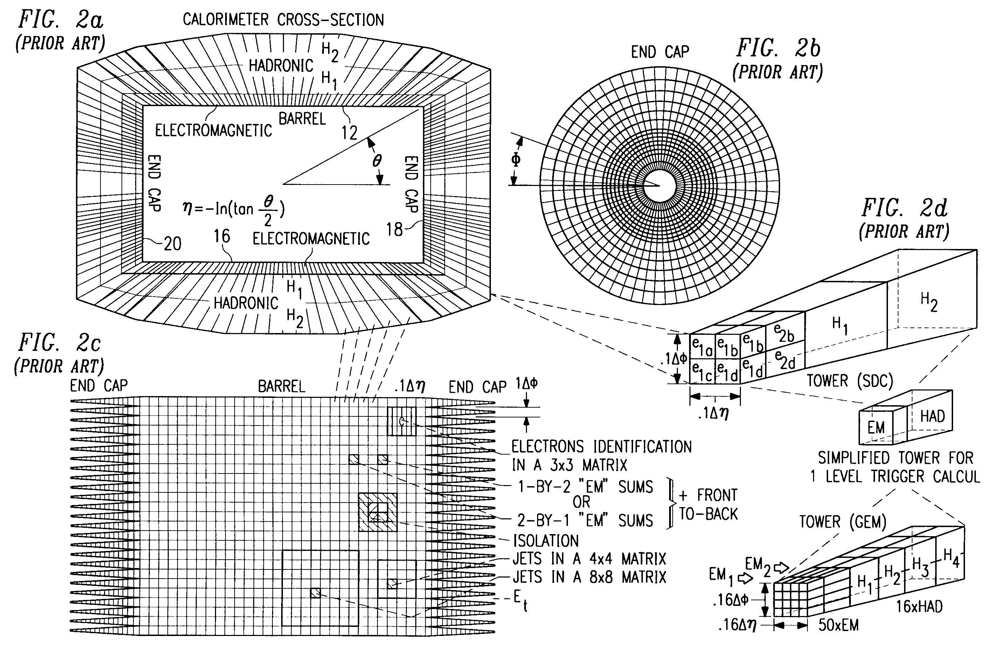

Referring now to FIG. 2, there is illustrated in FIG. 2a a lengthwise cross-sectional view of the calorimeter 10, and in FIG. 2b there is illustrated a side view of the inside surface of the endcaps 12, 14. Each square in FIG. 2b represents the surface of one of the 80,000 to 120,000 sensors 16, while such sensors 16 are shown in cross-section in FIG. 2a. As shown in FIG. 2a, each sensor 16 comprises portions sensitive to electromagnetic particles as well as portions sensitive to hadronic particles. Therefore, each sensor 16 has an output signal which contains two parts, the electromagnetic portion and the hadronic portion.

Referring now to FIG. 2c, there is illustrated the interior surface of calorimeter 10 as if it had been unrolled onto a flat plane. In FIG. 2c, each small square represents the surface of one tower. A tower may be defined as any particular segmenting of sensors 16, but there are two very common types of towers, which are illustrated in FIG. 2d. The first type is the Solenoidal Detector Collaboration (SDC) tower which has surface dimensions within the calorimeter 10 of $.1\Delta\Phi$ by $.1\Delta\eta$ where

$$\eta = -\ln(\tan\theta/2)$$

where

$\theta$ =      The angle of incidence of the calorimeter tower.

and

$\Delta\Phi$ =      The angle difference in the plane perpendicular to the beam.

The second type of tower is the Gamma Electron Muon Collaboration (GEM) tower which has surface dimensions within the calorimeter 10 of $.16\Delta\Phi$ by $.16\Delta\eta$. Within each tower (SDC or GEM), the electromagnetic ("em") signals are summed and the hadronic ("had") signals are summed before a single "em" and a single "had" signal are sent to the Level 1 trigger. The Level 1 trigger is physically a parallel processor array where each calorimeter 10 tower has a one-to-one correspondence with a processor cell in the processor array. Each processor receives two bytes of information from its associated tower every 16 ns., one byte being the "em" signal and the other byte being the "had" signal. Each of these bytes may have a value of zero or a value representative of the energy of the particle impinging upon the tower. Therefore the size of the processor array depends upon the segmentation and granularity of the calorimeter 10. When using the SDC tower, 3584 processors are required. When using the GEM tower, 1250 to 2000 processors are required. It will therefore be appreciated by those skilled in the art that the grid of FIG. 2c is also representative of the processor array, where each square is representative of one processor.

The Level 1 trigger must distinguish between events of interest and background events. There are many conditions to test when making a Level 1 decision. For example, to distinguish electrons and photons, the "em" trigger tower energy must be greater than a set threshold energy, the "had" to "em" energy ratio must be very small, and if isolation is to be achieved in Level 1, the surrounding towers must contain only small amounts of energy. For jet (a localized spray of electrons) identification, the sum of a tower matrix must be tested against a threshold energy.

There exist several methods to verify the existence of such conditions. A first method identifies a "cluster", distinguished by a "hit" (a signal indicating a particle impact) in a single tower with all of the energy of the cluster deposited in the surrounding 3x3 matrix of towers. The center of the cluster is found by determining the tower in the cluster which is the local maximum (the tower which contains most of the energy of the cluster). FIG. 3a illustrates such a test schematically. The local maximum C is found when a cell (tower) has a total energy greater than or equal to the total energy of all eight neighboring cells in a 3x3 matrix and the energy of all nine cells is greater than a threshold energy, or

$$C > I_i \text{ for } i = 1, 2...8$$

and

$$\Sigma_{i=1 \text{ to } 8}(I_i + C) > \text{Threshold.}$$

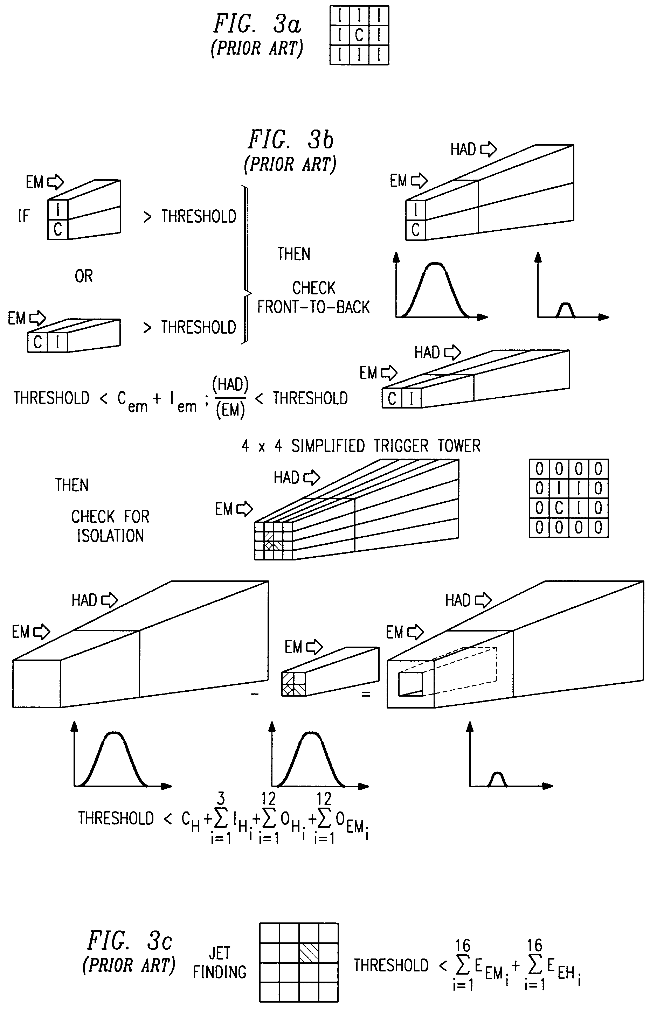

Referring now to FIG. 3b, there is illustrated a second method of determining an electron hit which takes into consideration the possibility of a hit occurring between two towers. In such a case, the energy of the electron would be distributed between the two towers. Therefore, an electron is distinguished from other particles by a 1x2 or 2x1 region containing most of the energy, while the surrounding cells receive almost none. As shown in FIG. 3b, the energies of each 1x2 and 2x1 pair are summed to determine if their summed energies are greater than a threshold value. If so, then a check must be made to determine if most of the energy is contained in the "em" region of the towers or the "had" region. This must be done because electrons deposit most of their energy into the "em" region, while hadrons deposit most of their energy into the "had" region. Therefore, a front-to-back check of the 1x2 or 2x1 tower pair is made to verify that the "had"-to-"em" energy ratio is below a threshold value. The check for the second method is therefore

3

$C_{em} + I_{em} >$ Threshold

and

$(had)/(em) <$ Threshold.

If these conditions are true, then it must be determined if the 1x2 or 2x1 tower pair is isolated. As further illustrated in FIG. 3b, this is done by examining the 4x4 tower cluster to determine if most of the energy is contained within the "em" region of the 1x2 or 2x1 pair. The energies of the "had" region of the C tower is summed with the "had" energies of the three I towers, the "had" energies of the 12 surrounding outer towers and the "em" energies of the 12 surrounding outer towers to determine if this total energy is less than a threshold value:

$$C_H + \Sigma_{i=1 \text{ to } 3}(I_{Hi}) + \Sigma_{i=1 \text{ to } 12}(O_{Hi}) + \Sigma_{i=1 \text{ to } 12}(O_{EMi}) < \text{Threshold.}$$

Referring now to FIG. 3c, there is illustrated schematically a third method which is used to identify a jet. In this method, the "em" and "had" energies of a matrix of towers are summed. If the summed energy is greater than a threshold value, then the presence of a jet is determined. FIG. 3c illustrates the use of a 4x4 matrix of cells, which is appropriate for lower energy particles, while an 8x8 matrix is appropriate for higher energy particles. For the 4x4 matrix, the test is

$$\Sigma_{i=1 \text{ to } 16}(E_{EMi}) + \Sigma_{i=1 \text{ to } 16}(E_{Hi}) > \text{Threshold.}$$

All of the event identification methods described above for the Level 1 trigger are additionally illustrated in FIG. 2c.

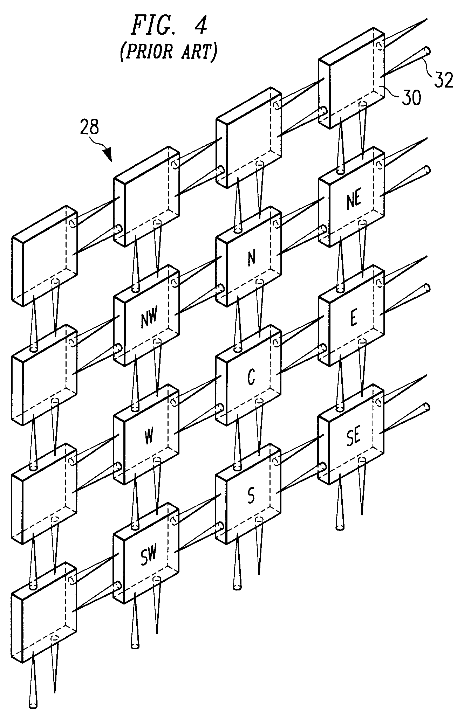

As mentioned above, each tower, or cell, feeds its output signal to a processor in a processor array. It will be appreciated by those skilled in the art that in order for each processor to make the determinations outlined in reference to FIG. 3, it must have access to the signals sent by the calorimeter 10 to adjacent and nearby cells. For example, in order for the processor associated with the C cell of FIG. 3a to identify that cell as the center of a cluster, it must have access to the signals sent to the eight adjoining I cells. In order to identify a jet in a 4x4 matrix as illustrated in FIG. 3c, a cell processor must have access to the data from 15 other nearby cells. Referring now to FIG. 4, there is illustrated a perspective schematic view of a portion of such a processor array, indicated generally at 28. The boxes 30 represent individual processor elements while the arrows 32 represent paths of data flow between processors. Such a processor array 28 has typically been used in the past to perform the Level 1 trigger calculations, and each processor 30 is designed to transmit data to and receive data from each of its neighbors, as well as to relay data from one neighbor to another without processing such data. For example, the processor 30 labeled C must transmit and receive data directly to and from its north neighbor (labeled N), its east neighbor (labeled E), its south neighbor (labeled S) and its west neighbor (labeled W). Additionally, the processors N, E, S and W must relay data to processor C from processors NW, NE, SE and SW in order to determine if processor C is the center of a 3x3 cluster, for example. It will be appreciated that data from more remote processors must also be relayed to processor C in order for it to perform the 4x4 or 8x8 jet calculation.

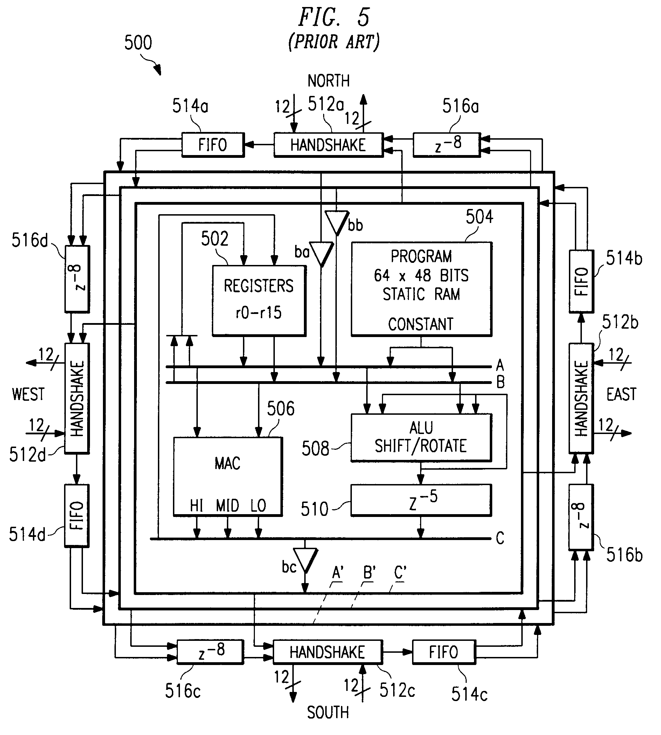

Referring now to FIG 5, there is illustrated a schematic view of a prior art processor 30, indicated generally at 500. Such a processor is manufactured by ITT, Inc. under the trademark DAVIS or DATAWAVE. The processor 500 contains a register set 502 containing 16 registers for storing data during program execution and a random access memory (RAM) 504 for storing the program instructions to be executed. Data from any of the registers 502 may be placed on either of two busses A or B, and data on either of the buses A or B may be placed in any of the registers 502. Program instructions from RAM 504 may be placed on either of the buses A or B. Processor 500 further includes a multiplier/accumulator (MAC) 506 which receives input data from both buses A and B. The output from MAC 506 is placed on a third bus C. Processor 500 also includes an arithmetic logic unit (ALU) 508 which receives inputs from the buses A and B, and also from its own output. The output of ALU 508 is not available at the next clock cycle, and this delay in the output is represented by element 510. After this delay, the output is routed onto the bus C. The elements 502-510 of processor 500 are surrounded by a three-ring bus A', B' and C' which is optimized for communication between the processor 500 and its four neighboring processors 500 in the array 28. Bus C' receives data from bus C through buffer bc. This data may then be passed to processors 500 located to the north, east, south or west through handshake circuitry 512a, 512b, 512c or 512d, respectively. Bus A' is coupled to bus A through buffer ba and bus B' is coupled to bus B through buffer bb. Data may be loaded onto buses A' and B' from processors 500 located to the north, east, south or west through handshake circuitry 512a-d and respective associated FIFO (first in, first out) devices 514a-d. Additionally, data on buses A' ,B' or C' may be passed to other processors 500 located to the north, east, south or west through respective handshake circuitry 512a-d. This transfer is subject to additional propagation delay indicated by 516a-d. The processor 500 has a "deep" pipeline structure which allows new instructions to be started every clock cycle, and internal operations allow values in the MAC 506 and ALU 508 to be used in the next clock cycle.

The three-ring bus architecture of the processor 500 makes it possible to receive from two ports and send to all four ports within 13 clock cycles (the pipeline configuration accepts new inputs at each clock cycle). The processor 500 timing is data-driven, meaning that it is the data flows which control the instruction execution, not non-local clock timing. When the program calls for a data fetch from one of the ports, program execution is paused until that port issues a data ready signal.

In order to load data into the processor 500 from the calorimeter 10, its north port is disconnected from its north neighbor and coupled to the calorimeter 10 by use of a multiplexer (not shown). Once the calorimeter 10 data is sent to the processor 500, the cell disconnects from the calorimeter 10 and reconnects to its north neighbor.

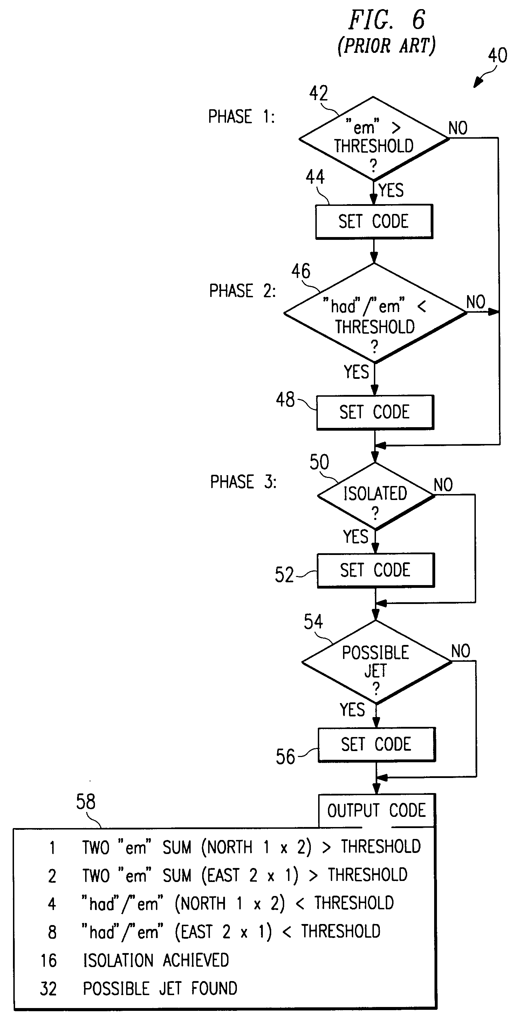

Referring now to FIG. 6, there is illustrated a flow diagram of a typical algorithm, indicated generally at 40, which may be performed by each of the processor elements 30. Prior to executing the algorithm 40, each processor 30 has received a two byte signal, representing "em" and "had" levels, from its associated tower, has transmitted this data to its neighboring processors 30, has received data from its neighboring processors 30, has received data relayed through its neighboring processors 30 and has itself relayed data from neighboring processors to other neighboring processors. After this transmission of data is complete, each processor 30 executes the algorithm 40 beginning at decision point 42, which determines if the "em" signal from its associated tower and its north neighbor (north 1x2) is greater than the preset threshold or if the "em" signal from its associated tower and its east neighbor (east 2x1) is greater than the preset threshold, as indicated in FIG. 3b. A different code is set for each of these conditions at block 44. Next, decision point 46 determines if the "had"/"em" signals from the north 1x2 is less than another preset threshold or if the "had"/"em" signals from the east 2x1 is less than the preset threshold, also as indicated in FIG. 3b. If either of these conditions is true, block 48 sets the appropriate code. Next, the process continues at decision point 50. If none of the threshold conditions had been met at decision points 42 or 46, the process would have jumped directly to decision point 50. The process checks for isolation as discussed with reference to FIG. 3b at decision point 50. If isolation has been achieved, an appropriate code is set at block 52. The process proceeds to decision point 54 from block 52 or from decision point 50 if no isolation was achieved. Decision point 54 determines if there is a possible jet in either a 4x4 matrix or an 8x8 matrix, as discussed in reference to FIG. 3c. If a possible jet is found, an appropriate code is set at block 56 and the processor then outputs the resulting code at block 58. Note that if no jets were found at decision point 54, the process would have jumped directly to output block 58. As displayed in output block 58, the various codes set throughout the process are added to any previous code, so that only one number is output by block 58. The values of the various codes are chosen so that the conditions they represent may be decoded uniquely from the output code. A sample of such codes is shown in output block 58. For example, if the output block 58 returns a code of 37 (32 + 4 + 1), it is indicative of a possible electron being found (1), which was not isolated from the surrounding energy (4) and the cell may be part of a possible jet (32).

As discussed previously, new data is sent to the level 1 trigger processor array 28 every 16 ns. If the algorithm must be executed in less than 16 ns., the processor elements 30 must operate at extremely fast speeds in order to affect all of the necessary data swaps and relays, calculate the desired trigger algorithm and output the code in less than 16 ns. In fact this is not possible with present technology. It is therefore desirable to achieve a processor array which can execute operations similar to those discussed above while receiving (and in some cases, forwarding) new data every 16 ns. It is also desirable to achieve a processor array which may be easily reconfigurable in order to account for upgrading to new processor elements which operate at a faster clock speed, as well as to account for algorithms of varying length and execution time.

## SUMMARY OF THE INVENTION

It is therefore the object of the present invention to provide a parallel processing architecture which overcomes most of the problems of the prior art by providing a processor array which may accept input data at a faster rate than its processing elements may execute their associated algorithms, while maintaining modularity, flexibility and expandability. When applied in high energy physics experiments, the parallel processing architecture is programmable with an instruction set to allow objects to be identified by data coming from a calorimeter. In other words, the objects are defined by information related to their shape in two- and three- dimensions.

In high energy physics experiments, sensors (e.g. photomultipliers, photoresistors, phototransistors) generate an analog electrical signal. This signal has to be converted into a digital signal by an analog to digital converter and then transmitted (in either serial or parallel format) through optical fiber or copper wire from the calorimeter to the control room where the electronics of the parallel processing system resides. The parallel processing system contains a first stage where a receiver converts the serial or parallel data to the input format of the processor array. This input is then sent to the first stage of the parallel processing array. The parallel processing array manipulates the data and creates output data. The output data contains the code related to the identification of the detected particle. The output in the parallel processing system is sent to a field programmable array (e.g. XILINX). The field programmable array correlates all output results.

In one form of the invention, a three dimensional flow processor is disclosed, comprising a central processing unit, a first plurality of buses coupled to the central processing unit, an input data port coupled to at least one of the first plurality of buses and an output data port coupled to at least one of the first plurality of buses, wherein data appearing on the input data port is routed to the output data port if the central processing unit is busy.

In another form of the invention, a three dimensional flow processor is disclosed comprising a central processing unit, a first plurality of ring buses coupled to the central processing unit, a north data port coupled to at least one of the ring buses for bidirectional communication, an east data port coupled to at least one of the ring buses for bidirectional communication, a south data port coupled to at least one of the ring buses for bidirectional communication, a west data port coupled to at least one of the ring buses for bidirectional communication, a top data port coupled to at least one of the ring buses for receiving input data and a bottom data port coupled to at least one of the ring buses for outputting data, wherein the input data appearing at the top data port is routed to the bottom data port if the central processing unit is busy.

In another form of the invention, a parallel processing architecture is disclosed comprising a first two-dimensional grid of first processing elements, each of the first processing elements having a first input and a first output and a second two-dimensional grid of second processing elements, each of the second processing elements having a second input and a second output, wherein each second input is coupled to a corresponding first output of a corresponding first processor element, so that an input signal on the first input is passed to the second input if the corresponding first processing element is busy.

In another form of the invention, a parallel processing architecture is disclosed, comprising a first plurality of array processor modules, arranged in a first two-dimensional grid, each of the first plurality of array processor modules coupled to a first, second, third and fourth adjoining ones of the first array processor modules for communication therebetween, except for first edge modules of the first plurality of array processor modules located on an edge of the first two-dimensional grid, the first edge modules being coupled only to the first, second and third adjoining ones of the first array processor modules for communication therebetween, a second plurality of array processor modules, arranged in a second two-dimensional grid, each of the second plurality of array processor modules coupled to a fifth, sixth, seventh and eighth adjoining ones of the second array processor modules for communication therebetween, except for second edge modules of the second plurality of array processor modules located on an edge of the second two-dimensional grid, the second edge modules being coupled only to the fifth, sixth and seventh adjoining ones of the second array processor modules for communication therebetween and communication means for enabling communication from each of the second plurality of array processor modules to a corresponding one of the first plurality of array processor modules.

## BRIEF DESCRIPTION OF THE DRAWINGS

The novel features believed to be characteristic of the invention are set forth in the appended claims. For a more complete understanding of the present invention, and for further details and advantages thereof, reference is now made to the following Detailed Description taken in conjunction with the accompanying drawings, in which:

FIG. 1 is a cut-away perspective of a prior art calorimeter;

FIG. 2 illustrates various portions of the calorimeter of FIG. 1;

FIG. 3 is a schematic representation of several tests for determining the detection of a particle in the calorimeter of FIG. 1;

FIG. 4 is a perspective schematic view of a portion of a prior art processor array;

FIG. 5 is a schematic diagram of a prior art processor element;

FIG. 6 is a flow diagram of a prior art algorithm which implements one of the tests of FIG. 3;

FIG. 7 is a perspective schematic view of a first embodiment of the present invention;

FIG. 8 is a perspective schematic view of a portion of the first embodiment of the invention;

FIG. 9 is a schematic illustration of the operation of the first embodiment of the present invention;

FIG. 10 is an assembler code listing for two pipeline stages of an the array of FIG. 7;

FIG. 11 is a schematic view of a second embodiment of the present invention;

FIG. 12 is an assembler code listing used in conjunction with the second embodiment of the present invention;

FIG. 13 is a perspective view of a third embodiment of the present invention;

FIG. 14 is a schematic view of a portion of the third embodiment of the present invention;

FIG. 15 is a top view of a circuit board layout for a first preferred implementation of the third embodiment of the present invention;

FIG. 16 is a bottom view of a circuit board layout for a first preferred implementation of the third embodiment of the present invention;

FIG. 17 is a top view of a circuit board layout for a second preferred implementation of the third embodiment of the present invention;

FIG. 18 is a bottom view of a circuit board layout for a second preferred implementation of the third embodiment of the present invention;

FIG. 19 is perspective view of a fourth embodiment of the present invention;

FIG. 20 is a perspective view of a fourth embodiment of the present invention;

FIG. 21 is a schematic view of a chip layout integrating four processors of the second embodiment of the present invention;

FIG. 22 is a top view of a circuit board layout for a third preferred implementation of the third embodiment of the present invention;

FIG. 23 is a bottom view of a circuit board layout for a third preferred implementation of the third embodiment of the present invention;

FIG. 24 is a top view of a circuit board layout for a fourth preferred implementation of the third embodiment of the present invention; and

FIG. 25 is a bottom view of a circuit board layout for a fourth preferred implementation of the third embodiment of the present invention.


## DETAILED DESCRIPTION OF THE DRAWINGS

The present invention is directed towards a parallel processing architecture. The embodiments of the present invention will best be understood by reference to FIGS. 1-25 of the drawings, wherein like numerals are used to designate like and corresponding parts of the various drawings.

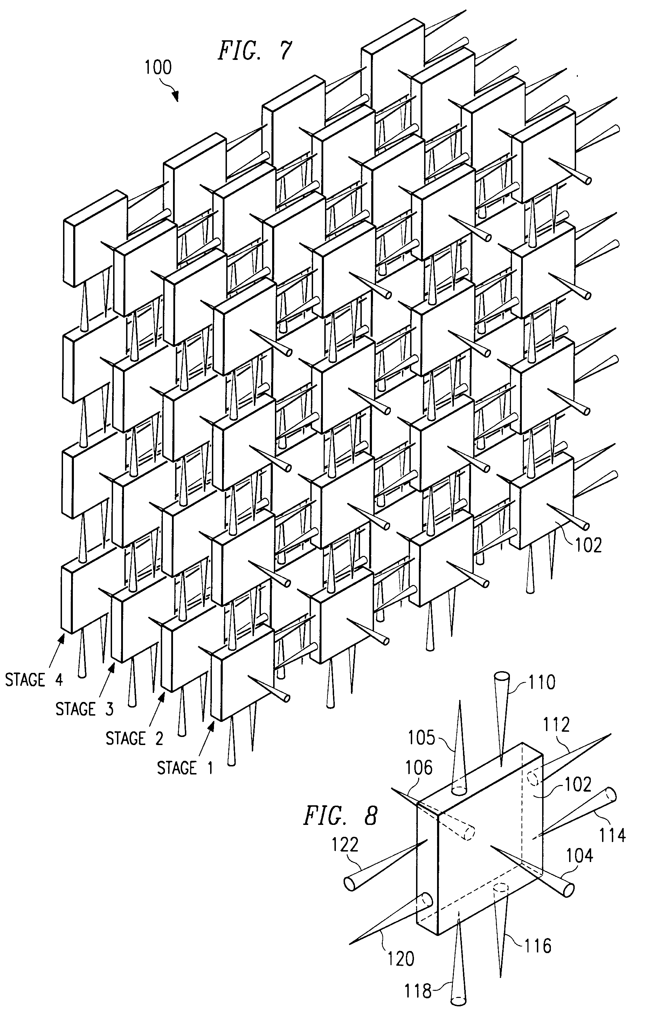

Referring to FIG. 7, there is illustrated a first embodiment of the present invention. FIG. 7 is a perspective schematic view of a portion of a three dimensional pipelined parallel processing array indicated generally at 100. The array 100 is illustrated as having four levels, or stages 1 through 4. The array 100 is illustrated as being four deep by way of illustration only. As discussed hereinbelow, the number stages in the array 100 is designed to be variable as the array is reconfigured.

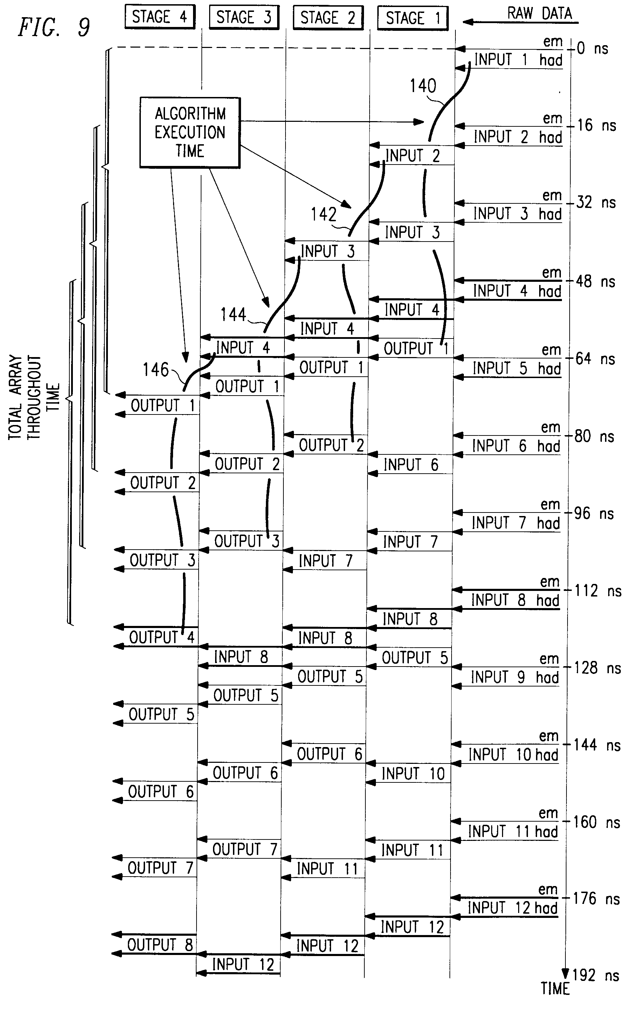

Referring now to FIG. 8, there is illustrated a perspective schematic view of each processor 102 of array 100. Each such processor 102 has an input 104 which is used to input data from the calorimeter 10 trigger tower in the stage 1 device, and to input data from the associated processor 102 in the previous stage for stage 2 through 4 devices. Output 106 is used to output data to the associated processor 102 in the next stage for stage 1 through 3 devices, and to output data from the array in the stage 4 devices. Each processor 102 further includes north output 108, north input 110, east output 112, east input 114, south output 116, south input 118, west output 120 and west input 122.

Referring again to FIG. 7, it will be appreciated that each processor 102 in the array 100 corresponds to a trigger tower element in the calorimeter 10, so that the entire array 100 will be cylindrical with only two edges. The processors 102 located at the two edges of the array 100 will have the appropriate inputs and outputs terminated (those which do not connect to another processor 102) and the program loaded in these processors will not foresee any input or output toward the edge. As discussed in reference to the array 28 of FIG. 4, each processor 102 of array 100 is capable of receiving a two byte signal (representing "em" and "had" levels) from its associated tower, of transmitting this data to its neighboring processors 102, of receiving data from its neighboring processors 102, of receiving data relayed through its neighboring processors 102 and of relaying data itself from neighboring processors to other neighboring processors. It will be appreciated by those skilled in the art that each processor 102 in array 100 may receive input data in any amount or configuration. Such input format considerations are a mere design choice and the present invention comprehends any suitable input format. But unlike the processors 30 of array 28 in FIG. 4, each processor 102 has the capability of passing an input signal appearing on input 104 directly to output 106 without acting upon it. At the most, each processor 102 can pass the digital input data through a look-up table that is converting the 8-bit compressed information into 12-bit linear. As will be discussed hereinbelow, this allows the array 100 to pipeline calculations, keeping up with the input data arriving every 16 ns. even though each processor requires considerably longer to swap data with other processors 102 and to execute its algorithm.

An example will serve to illustrate this principle. Referring still to FIG. 7, assume that the first proton beam crossing has occurred and that each tower of calorimeter 10 applies its output signal to input line 104 of each of the processors 102 in stage 1 of array 100. The stage 1 processors immediately begin their required data swapping, relaying and algorithm execution. At this point, the processors 102 of stages 2, 3 and 4 are idle. Assume further that the processors 102 require 64 ns. to accomplish these tasks and to produce an output code on output 106 which is indicative of the particle activity sensed at the corresponding calorimeter 10 trigger tower. If the prior art array 28 of FIG. 4 were processing this data, the next three data sets from the calorimeter 10 towers (arriving every 16 ns.) would be lost because the processors 30 would be busy. Because the processors require 64 ns. to complete their tasks and new input data is available every 16 ns., the prior art processor 30 can only analyze every fourth beam crossing.

This problem is solved in array 100 because every processor 102 is designed to pass input data appearing on input 104 directly to it output 106 if the processor 102 is still swapping data or executing its algorithm. Therefore, while the stage 1 processors are busy with the first data set of calorimeter 10 tower data, the second data set (or "event") corresponding to a frame arrives at the inputs 104 of the stage 1 processors and is transferred directly to the outputs 106 of the stage 1 processors, which are coupled to the inputs 104 of the stage 2 processors. The stage 2 processors now begin data swapping, data relaying and algorithm execution using the second data set. 16 ns. later, the third data set appears on the inputs 104 of the stage 1 processors. However, it has only been 32 ns. since the stage 1 processors began processing the first data set, so they are still busy. Likewise, the stage 2 processors are only 16 ns. into their 64 ns. routines and are thus busy. The third data set is therefore passed through the stage 1 and the stage 2 processors and is applied to the inputs 104 of the stage 3 processors, which immediately begin to execute their 64 ns. routines to process this third data set. 16 ns. later, a fourth data set appears on the inputs 104 of the stage 1 processors. However, the stage 1 processors are still only 48 ns. into their 64 ns. routines, so they are thus busy, as are the stage 2 and stage 3 processors. The fourth data set is therefore passed through the stage 1, 2 and 3 processors and applied to the inputs 104 of the stage 4 processors which begin to process this data. Finally, 16 ns. later, the stage 1 processors complete their routines and apply their respective output codes to their respective outputs 106. However, these outputs 106 are coupled to the inputs 104 of the stage 2 processors, which are still busy (only 48 ns. into their 64 ns. routines), so this output code is passed through the stage 2 processors. It is likewise passed through the stage 3 and stage 4 processors, which are also busy, and appears at outputs 106 of the stage 4 processors as an output of the array 100. At the same time that the stage 1 processors complete their routines, the fifth data set from the calorimeter 10 towers arrives at inputs 104 of the stage 1 processors. Since the stage 1 processors have now completed their processing of the first data set, they accept the fifth data set for processing. 16 ns. later, the stage 2 processors finish processing the second data set just as the sixth data set arrives at the inputs 104 of the stage one devices. The stage 2 processors accept the handoff from the stage 1 processors (which are now busy processing the fifth data set) at the same time that they output the codes resulting from the second data set. This output from the stage 2 processors is passed through the stage 3 and stage 4 devices and appears as an output to the array 100, 16 ns. after the first data set output. It will be appreciated by those skilled in the art that this pipelining of data will continue as long as input data continues to arrive at the array 100 every 16 ns. The array 100 therefore has a through put time of 64 ns. plus the time required to transfer signals through four levels of processors. Once the pipeline is full, however, data is output from the array 100 every 16ns.

Referring now to FIG. 9, the above example is illustrated schematically. The vertical axis represents time, which increases from top to bottom. Raw data enters from the right every 16 ns. The various arrows show the rippling of the inputs to the array 100 and the outputs from the various processor stages as they traverse the levels of the array 100. For example, inputs to the array 100 arrive every 16 ns. and outputs from the array 100 appear every 16 ns. after the initial array throughput time of something more than 64 ns. Path 140 illustrates the flow of input data into the stage 1 processors, with the output from the stage 1 processors appearing 64 ns. later and then rippling through the remaining levels until it arrives as array 100 output 1. Similarly, paths 142, 144 and 146 illustrate the data flow through the stage 2, 3 and 4 processors, respectively.

The method of pipelining the input data of the present invention is greatly preferred over a configuration where the calorimeter 10 trigger tower input data is routed to a multiplexer which has a different output that routes data to each processor input in the pipeline. Such an arrangement has the disadvantages of increased complexity through added hardware and control signals, increased complexity in timing considerations when deciding which processor in the pipeline to route the input data to, and non-flexibility (a larger multiplexer must be utilized if more pipeline stages are added). With the present invention, the function of the multiplexer is accomplished using a programmable instruction sequence in each processing element 102. All connections are made point-to-point for fast signal transmission. This results in a known maximum cable length (and therefore known maximum delay), as compared to the variable cable length inherent in the prior art multiplexing scheme.

The method of pipelining input data in the present invention is also greatly preferred over a configuration where the calorimeter 10 trigger tower input data is supplied directly to the inputs of every processor in the pipeline (a multi-drop configuration). Such a configuration has the disadvantage of requiring the input line to drive a large fan-out. Also, this fan-out is uncertain since pipeline stages may be added or taken away as the system requirements change. The present invention offers a much more efficient solution, where the fan-out for the input data line is always one (even if the number of pipeline stages is increased or decreased) and no fixed, external hardware or control lines are required to route the data to the appropriate processor in the pipeline. The prior art multi-drop configuration produces a variable fan-out and therefore a variable increasing capacitance of the signal line. The solution of the present invention allows the flow of input data and processor results along an I/O path (i.e. top to bottom) which can take place without interference to the algorithm being executed by the processor CPU (this allows execution of longer algorithms). The present invention also allows flexible algorithm control of data flow between processors and therefore provides modularity, flexibility and expandability which are not possible with the prior art configurations.

It is possible to utilize the processor 500 of FIG. 5 to perform the function of each processor 102 of FIG. 7. Due to the fact that there are only four ports on the processor 500, two of those ports must be able to connect to more than one cell. This may be accomplished by using multiplexers to connect each processor 500's north port 512a to both its northern neighbor and to the corresponding processor 500 in the preceding stage of the array 100 (or to the calorimeter 10 if the processor 500 is in the first stage), and by using additional multiplexers to connect each processor's south port 512c to both its southern neighbor and to the corresponding processor 500 in the following stage of the array 100 (or to the array 100 output if the processor 500 is in the last stage). Of course, the north and south ports are chosen here by way of example only, and any two ports may be used without preference.

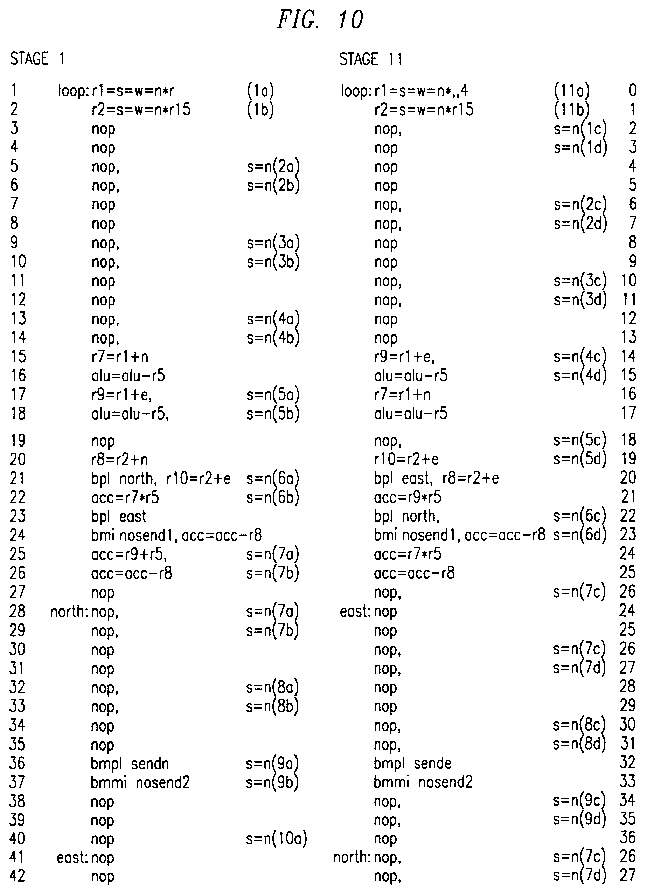

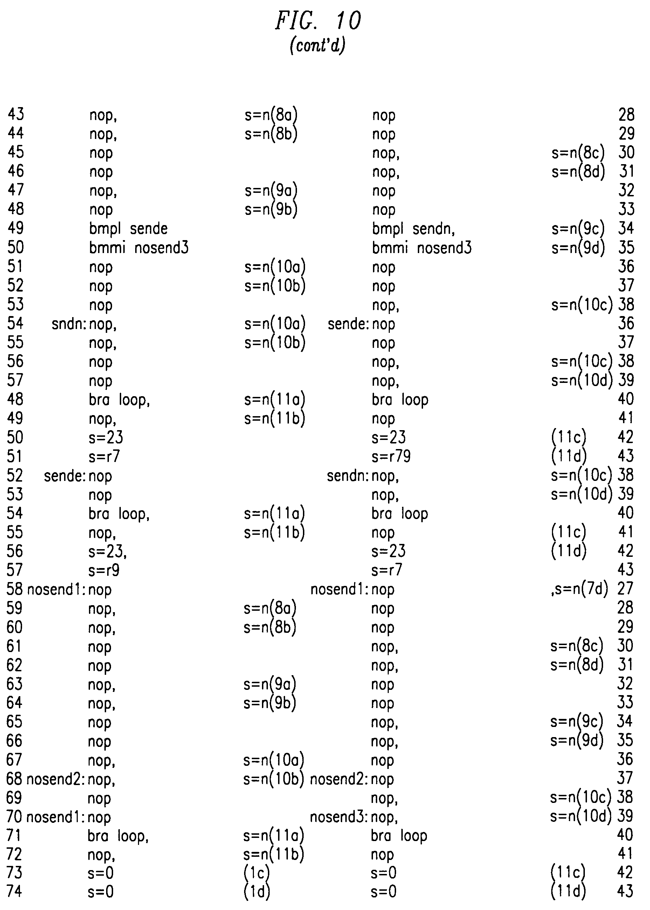

Referring now to FIG. 10, there is illustrated an assembler code algorithm for two pipeline stages (stage 1 and stage 11) of an array 100 using the processor 500 and associated multiplexing hardware (as discussed above) for each processing element 102. The algorithm of FIG. 10 performs the cluster finding process for a north 1x2 and east 2x1 which is illustrated in FIG. 3b and accompanying text. All pipelined code for each stage is shown to the left of the trigger algorithm. The pipeline symbol (in parenthesis) is the number of the pipelined stage that will use the input value or that has sent the output value. Different values are designated by the four symbols:

    a input "em" value
    b input "had" value
    c output cell tower value
    d output "em" value

The line number of the code is shown on the left, while the timing (clock cycle) is shown at the right.

The use of the processor 500 of FIG. 5 as the processor 102 in array 100 has several disadvantages. First, there is required additional multiplexing and control signal circuitry in order to connect and disconnect the north and south ports from their different inputs and outputs. Second, due to the fact that input values are pipelined at different times than output values, the pipeline code will be different for all stages in the pipeline. Since the north and south ports can be used for either connecting to north/south neighbors or for connecting to other pipeline stages, all lines of the trigger algorithm code involving these ports must be placed at different clock times than the pipelined stage code. For example, see the difference between the stage 1 code and the stage 11 code in lines 15-18 in FIG. 10. This creates serious complexities in writing and loading code for different stages in a multistage pipelined array 100.

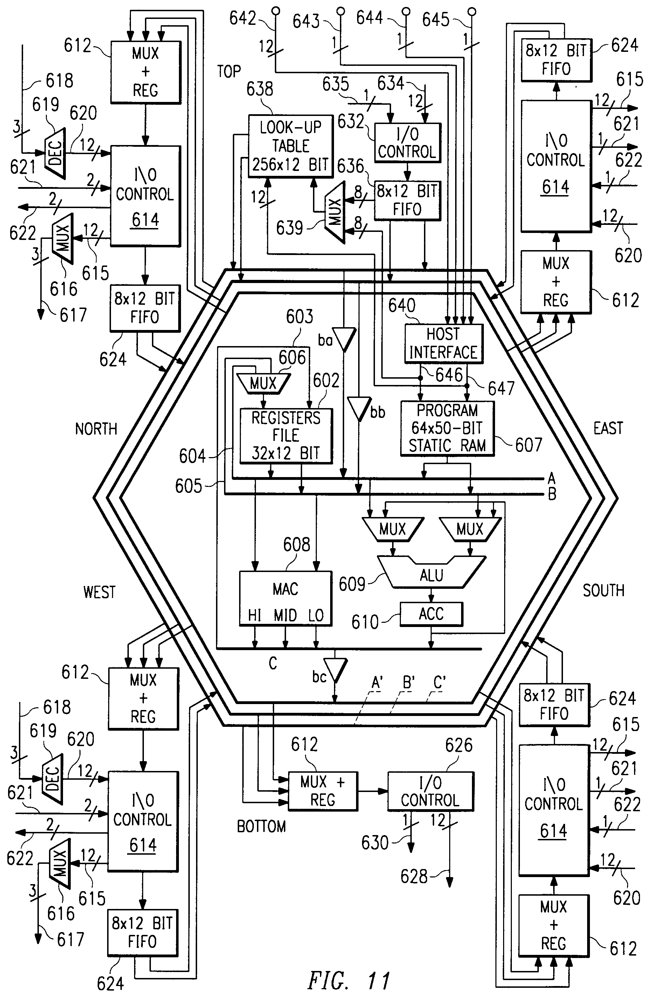

Referring now to FIG. 11, there is illustrated a second embodiment of the present invention. FIG. 11 illustrates a new architecture, indicated generally at 600, which is more suitable for implementing the processor 102 of array 100. Processor 600 adds the capability for communication in two additional directions (top and bottom). The north, east, south and west ports are bidirectional on separate lines for input and output, while the top port is for input only and the bottom port is for output only. The processor 600 contains a register set 602 containing 32 12-bit registers for storing data during program execution. Data is supplied to the registers 602 from the C bus on line 603, while the register address may be supplied from either the A or B buses via lines 604, 605 and multiplexer 606. A random access memory (RAM) 607 is provided for storing the program instructions to be executed. RAM 607 may store 64 50-bit program instruction words. Data from any of the registers 602 or program instructions from RAM 607 may be placed on either of two buses A or B. Processor 600 further includes a multiplier/accumulator (MAC) 608 which receives input data from both buses A and B. The output from MAC 608 is placed on the C bus. For most pattern recognition applications, the MAC 608 is not required and is therefore optional. It is required if digital filtering is to be performed by the algorithm (e.g. the multiplication of coefficients). Processor 600 further includes an arithmetic logic unit (ALU) 609 which outputs results to an accumulator 610 and receives inputs from the buses A and B, and additionally from the accumulator 610. The accumulator 610 additionally outputs data to the C bus. The composition and arrangement of the various elements 602-610 is not critical to the present invention. For example, additional memory may be added with address generation provided by program RAM 607 and bidirectional communication with any of the internal CPU buses A, B or C. The invention comprehends the use of any central processor unit (CPU) and the CPU shown in FIG. 11 is by way of example only.

The CPU of processor 600 is surrounded by a three-ring bus A', B' and C' which is optimized for communication between the processor 600 and its four neighboring processors 600 in the array 100, as well as to the associated processors 600 in the array 100 located in stages above and below. A separate data port is provided for communication in each of these six directions. The data ports for communication between the north, east, south and west neighboring processors 600 provide for two-way communication. Each such port comprises a multiplexer and register combination 612 which allows the ports to select and latch data from any of the three buses A', B' or C'. This data is then coupled to appropriate input/output (I/O) control circuitry 614. Two possible connections from outside of the processor 600 to the I/O circuitry 614 are shown in FIG. 11. The first option is shown for the north and west ports. I/O output lines 615 are 12 bits wide and are multiplexed by multiplexer 616 down to a 3-bit wide output line 617. Similarly, input lines 618 are 3 bits wide and are decoded by decoder 619 to produce a 12-bit input line 620. Appropriate control signals for this communication are provided on lines 621 and 622. The second option for connection from outside of processor 600 to the I/O circuitry 614 is shown for the east and south ports. Here, 12-bit output lines 615 and 12-bit input lines 620 are used directly between processors 600, with no multiplexing or decoding. Appropriate control signals for this communication are provided on lines 621 and 622. The processor 600 may utilize either the first or second communication options, or both. The first option has the benefit of requiring fewer interconnection lines between processors 600 at the cost of speed. The second option is the fastest, but it requires four times as many interconnecting lines. A combination of the two options may be suitable if, for example, the processor 600 is located at the northwest corner of a multi-processor package. In such a situation, the processor 600 illustrated in FIG. 11 may be the best solution, because the north and west ports, which must communicate off-chip, require only three lines (and therefore three package pins) to communicate in each direction. On the other hand, the east and south ports will be communicating with other processors 600 located within the package and therefore the full twelve line data path may be provided without any constraints imposed by the number of pins available on the package. Because the processor 600 is data driven, the differences in time delay while communicating in different directions does not increase the complexity of the programming. The CPU will simply wait for the data to become available before proceeding. With the current state of high density packaging, it is possible to put four processors 600 in a single package and still have enough pins to use the full 12-bit communication path on all ports.

Data received by each of the ports north, east, south or west may be placed onto either the A' or the B' buses by passing the input data from the I/O circuitry 614 though an 8 by 12-bit FIFO 624. The bottom port is capable of outputting data only, and hence includes a multiplexer/register 612 and an I/O control 626 which has only 12-bit output lines 628 and control line 630. The top port is used for input only. It includes I/O control 632 with 12-bit wide input lines 634 and associated control line 635. Data received by I/O circuitry 632 is passed to FIFO 636. If the data being received by the top port is coming directly from the calorimeter 10 trigger tower, it will be only 8 bits wide and will have to be normalized to 12-bit data. Look-up table 638 is provided for this purpose. The 8-bit incoming data is passed to look-up table 638 via multiplexer 639 and is used as an address to a unique location within look-up table 638, which outputs 12-bit data to buses A' and B'. If, on the other hand, the data being received by the top port is coming from another processor 600 (i.e. from the array 100 stage above this processor 600), it is already in 12-bit format and is consequently passed directly to the A' and B' buses.

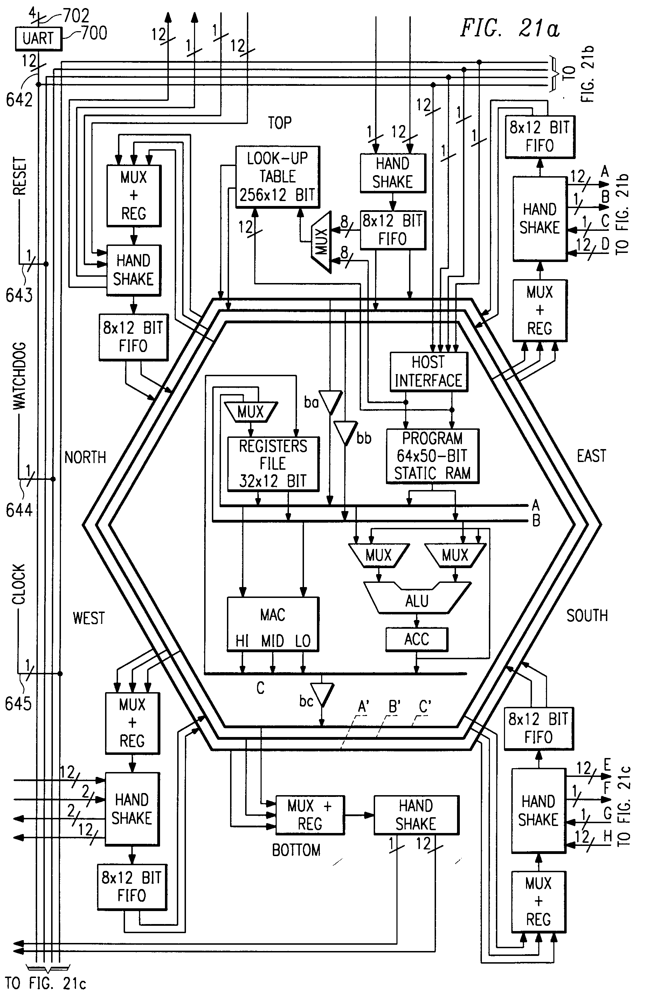

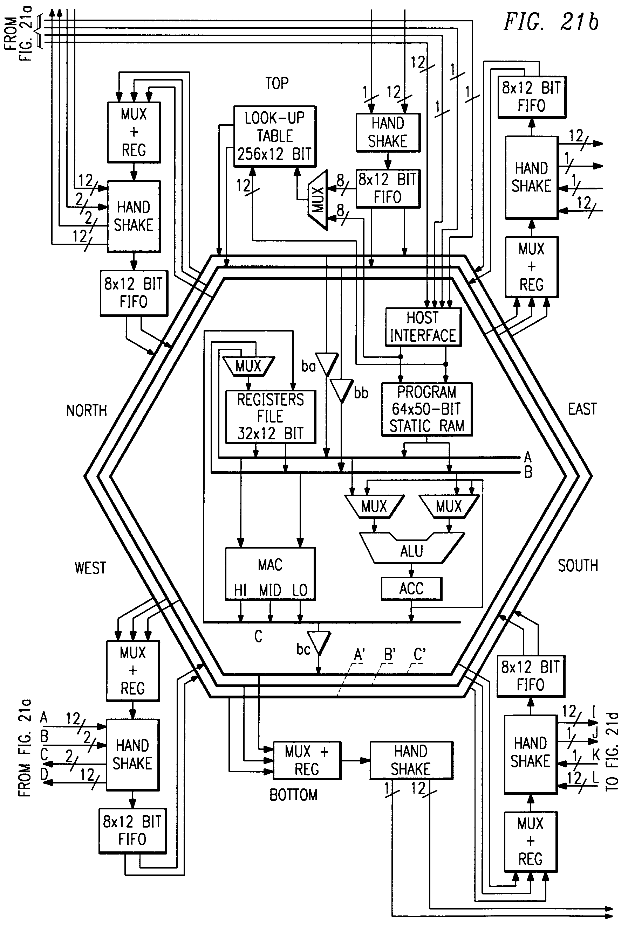

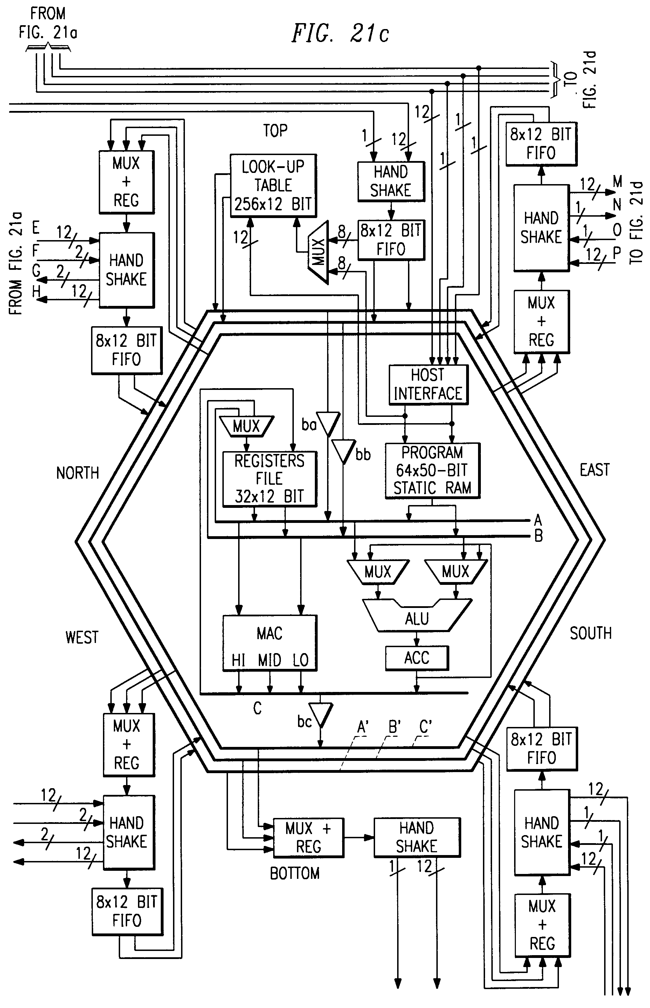

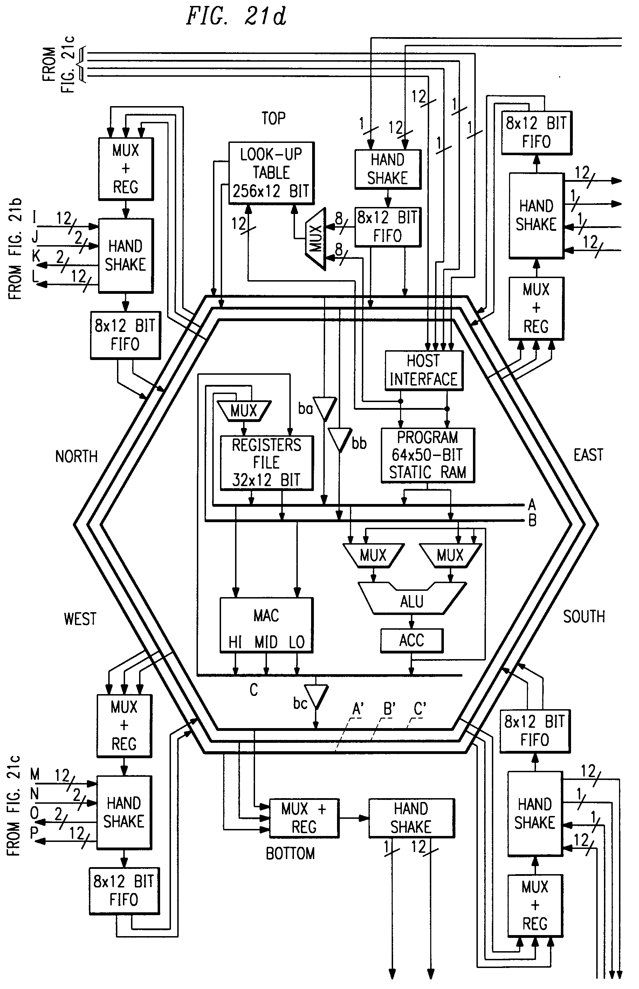

A host interface 640 is provided for receiving data from a universal asynchronous receiver/transmitter (UART, see FIG. 21) located in the same package as the processor 600. If there is more than one processor 600 per chip, they may all share the same UART. The host contains registers and other appropriate circuitry to facilitate interface between the processor 600 and slow communications from the outside world for programming purposes. The host 640 receives 12-bit data lines 642 from the UART, as well as RESET, WATCHDOG and CLOCK control signals on lines 643, 644 and 645, respectively. The algorithm which the processor 600 is to execute is loaded into program RAM 607 through the host 640, which provides address information on 8-bit lines 646 and data on 12-bit lines 647. Host 640 is also used to load data into look-up table 638 by use of the same lines 646 and 647.

Bus C' receives data from CPU bus C through a buffer bc. This data may then be passed to other processors 600 located to the north, east, south, west or bottom through I/O circuitry 614 or 626. Bus A' is coupled to CPU bus A through buffer ba and bus B' is coupled to CPU bus B through buffer bb. Data may be loaded onto buses A' and B' from processors 600 located to the north, east, south, west or top through I/O circuitry 614 or 632 and respective FIFO devices 624 and 636. Additionally, data on buses A' ,B' or C' may be passed to other processors 600 located to the north, east, south, west or bottom through respective multiplexers 612 as well as associated I/O circuitry 614 or 626. It is noted that the CPU and each of the ports may be coupled to any of the three ring buses A', B' or C' in any combination. The more connections that are provided, the more flexibly the processor 600 may operate, but there is a trade-off in complexity and cost. The particular arrangement of bus connections shown in FIG. 11 is by way of example only, and the present invention comprehends that the ports may be coupled to the various buses in many different combinations without departing from the spirit and scope of the present invention, as defined in the appended claims.

The three-ring bus architecture of the processor 600 makes it possible to receive from two ports and send to five ports during the same clock cycle. During the same cycle, results from the internal units (ALU 609, MAC 608, etc.) may be sent through the internal ring bus to a maximum of five ports. The processor 600 timing is data-driven, meaning that it is the data flows which control the instruction execution, not non-local clock timing. When the program calls for a data fetch from one of the ports, program execution is paused until that port issues a data ready signal.

The algorithm is loaded into each individual program RAM 607 through the UART serial I/O. During execution of the algorithm, the UART interface should have access to a status register of each processor 600 in order to allow for monitoring of the activity of the algorithm execution. The UART should also allow single-step execution of programs at each processor 600 during debugging of the system.

The processor 600 of FIG. 11 has further advantages over the processor 500 of FIG. 5. Since the algorithms which implement the level 1 trigger functions typically utilize only a fraction (22%) of the instruction set of the prior art device, the processor 600 has a reduced instruction set, incorporating only instructions that are foreseen to be used by the triggering algorithms (see Table I). This not only makes the processor 600 simpler and more reliable than the processor 500, but also more economical by dropping a large percentage of the instructions.

Table I

| Instruction | Description | Instruction | Description |
|---|---|---|---|
| nop | no operation | alu = A - B | |
| hi = B | load hi from B | bra | branch |
| lo = B | load lo from B | bmmi | acc < 0 |
| mid = B | load mid from B | bmpl | acc > = 0 |
| ^acc = +A * B | | beq | alu = 0 |
| ^acc = acc + B | | bne | alu < > 0 |
| ^acc = acc - B | | bmi | alu < 0 |
| ^acc = acc+A*B | | bpl | alu > = 0 |
| ^alu = A + B | | | |

^NOTE: a port can be used in place of acc, alu, A or B except when the acc or alu is used twice in the same instruction, in which case the port may only be used as an output and not as an input.

In addition to reducing the instruction set, if the pipelining of instructions within processor 500 is removed in processor 600 (resulting in an output that can be used after one clock cycle) and if the propagation 516a-d between processors 500 is removed (resulting in data sent from one cell being received at another cell after one clock cycle), all nops will be removed from the algorithms. Additionally, the number and the size of the registers in register array 502 has been increased in processor 600. It is foreseen that it may be necessary to receive more values from the calorimeter 10 trigger tower, or that it might be necessary to have more calibration constants (for different $E_r$, $E_{TOT}$, $E_x$, $E_y$, etc.) or different thresholds. Therefore, the number of registers is increased as well as the size of each register to accommodate higher precision data.

At each input port of the processor 600, there is a FIFO 624 or 636 that is derandomizing the data from the calorimeter 10 trigger towers to the processor array 100. This allows the calorimeter 10 to send data ("em" and "had") every 16 ns., and the processor to fetch values whenever the program executes a fetch instruction (assuming a 4 ns. clock cycles). The program execution at stage 1 must not only route the new incoming data from the calorimeter 10 (one "em" and "had" value every 16 ns.) to the next stage in the pipeline staging (stage 2), but must also execute its trigger algorithm in parallel. All processors 600 must likewise pipeline data. When the stage 1 processor has finished its algorithm, it then sends its results to the stage 2 processor, which passes it on. At this point, the stage 1 processor begins to re-execute its algorithm, receiving the next "em" and "had" values from the calorimeter 10 and processing those values. The output results from all processors 600 flow (like the input data) through the different processor stages. The last processor 600 will output the results from all of the processors at a maximum rate of 16 ns. (the same as the input data rate).

Referring now to FIG. 21, there is illustrated a schematic view of a single chip containing four processors 600, UART 700 and associated interconnections. UART 700 receives 4-bit data on lines 702 from off-chip and transmits this as 12-bit data over lines 642 to host interfaces 640 of each processor 600. RESET, WATCHDOG and CLOCK control signals are received from off-chip and transmitted to each processor 600 over lines 643, 644 and 645, respectively. All other input and output lines shown which go to the edge of the chip are provided for connection to other processors 600 located off-chip.

12

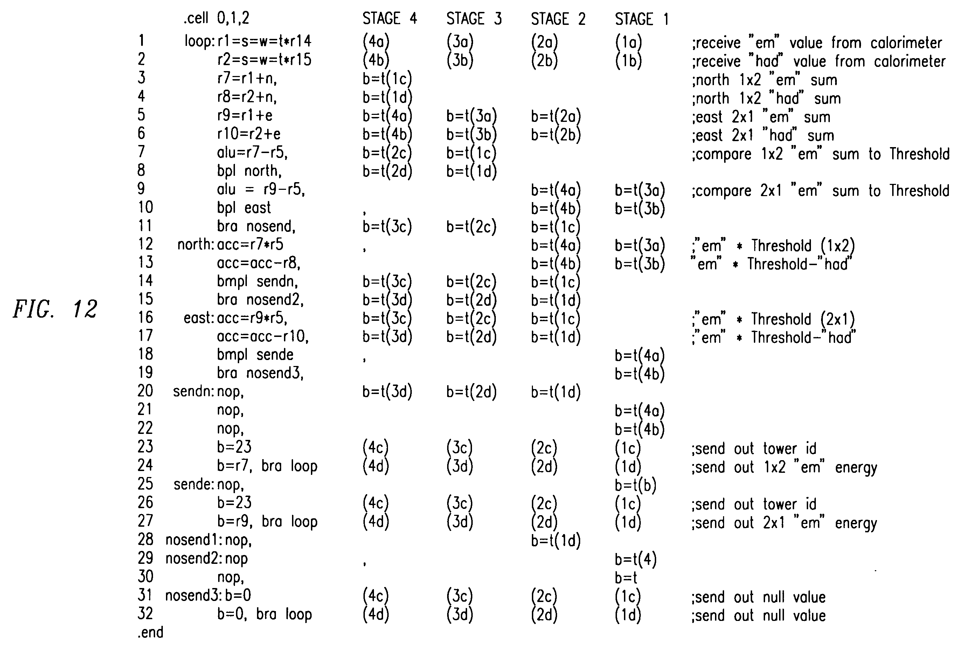

Referring now to FIG. 12, there is illustrated an example of the assembler code used by each of the processors 102 in the array 100 to determine the north 1x2 and east 2x1 sums (two "em" sum + front-to-back algorithm) illustrated in FIG. 3b and accompanying text. The code of FIG. 12 was written for the processor 600, while the code of FIG. 10 implements the same function for the processor 500. All processors 600 in the array 100 are loaded with the same algorithm for finding electrons (the left hand column in FIG. 12), but the routing between different stages (the top-to-bottom instruction) depends on the processor's stage position. The assembler code for routing between stages is shown in FIG. 12 for all stages needed for this algorithm. A graphical representation of the input and output data routing between stages, the algorithm execution time at each stage, the latency between input data and output results and the data flow in the pipelined architecture is shown in FIG. 9.

All pipelining is explained in parenthesis after the "b = t" instruction (the top-to-bottom instruction). The number is the processor 600 stage number where the data that is being pipelined will be processed or where the outputted data was originally sent from. The codes are as follows:

a inputted "em" value

b inputted "had" value

c outputted tower id

d outputted "em" sum (either 1x2 or 2x1)

The tower id + "em" energy is sent out at t = 31 and 32 (56-60 ns after the processor fetches the data). It will be appreciated by those skilled in the art that similar code may be used to implement any type of particle identification using the relevant calorimeter 10 trigger tower data.

Table II summarizes the dramatic increase in performance possible with the processor 600 as compared to the prior art processor 500. Algorithm execution times as well as number of pipeline stages required (assuming a 60 Mhz input data rate) are shown for several calorimeter 10 trigger tower trigger algorithms.

Table II

| | PROCESSOR 500 | | PROCESSOR 600 | |
|---|---|---|---|---|
| Algorithm | Algorithm time in clock cycles | Number of processor stages | Algorithm time in clock cycles | Number of processor stages |
| Filter | 10 | 1-2 | 6 | 2 |
| 3x3 cluster 1 cell/chip | 50 | 13* | 22 | 6* |
| 3x3 cluster 16 cells/chip | 72 | 18* | 26 | 7* |
| em < thresh. + front-to-back | 43 | 11 | 15 | 4 |
| electron isolation | 65 | 17* | 17 | 5* |
| jet finding (4x4) | 65 | 17* | 14 | 4* |
| jet finding (8x8) | 120 | 30* | 20 | 8* |
| $E_r, E_{TOT}, E_x, E_y$ | 55 | 16* | 11 | 3* |
| em < thresh. + front-to-back + isolation + jet finding (4x4) | 116 | 29* | 31 | 8 |

*NOTE: Estimated number of stages.

Assembly code listings for the algorithms listed in Table II may be found in Crosetto et al.,"Fully Pipelined and Programmable Level 1 Trigger", Superconducting Super Collider Laboratory publication SSCL-576, July 1992, which is incorporated herein by reference in its entirety.

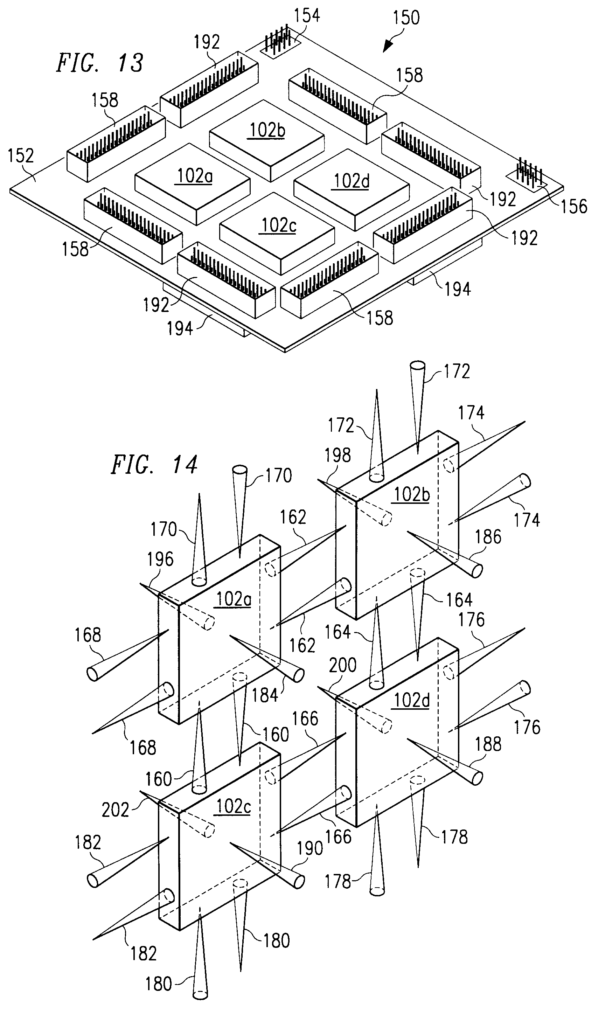

Referring now to FIG. 13, there is illustrated a third embodiment of the present invention, a processor array module indicated generally at 150. Several processor array modules 150 may be cascaded together to physically implement the processor array 100 of FIG. 7. In the illustrated embodiment of FIG. 13, processor array module 150 contains four individual processors 102a, 102b, 102c and 102d. The number of processors per module 150 is chosen for convenience and may be selected to be more or less than four. The first devices of the third embodiment constructed by the inventor utilized 16 processors 102 per module 150, however four processors have been shown herein in the third embodiment mainly for ease of illustration and clearness of explanation. Additionally, the four processors 102a, 102b, 102c and 102d may be packaged in a single package. The processors 102 are mounted on a suitable carrier substrate 152, such as a printed circuit board (PCB). A male connector 154 is provided on PCB 152 for connection to a universal asynchronous receiver transmitter (UART) to allow field programming of the algorithm routines of the processors 102, and for connection to various control signals, such as RESET, CLOCK and WATCHDOG. For this purpose, connector 154 is coupled to the appropriate pins of processors 102. A second male connector 156 is provided for connection of power supply and ground lines to the processors 102. The remaining connectors mounted on processor array module 150 are provided for interconnections between other processor array modules 150 to form array 100, as described hereinbelow.

Referring now to FIG. 14, the processors 102a, 102b, 102c and 102d, as well as their various inputs and outputs, are illustrated schematically. It will be appreciated with reference to FIG. 13 that the connections 160, 162, 164 and 166 are made directly by traces on the PCB 152 running between the processors 102. Because processors 102 will be part of an array 100 when array processor module 150 is interconnected to other array processor modules 150, provision must be made to facilitate coupling of the remaining inputs and outputs to other array processor modules 150, some of which are in the same stage of array 100, and some of which are in a higher or lower stage (see FIG. 7). Turning first to the interconnections to other modules 150 in the same stage, there are provided four male connectors 158 on PCB 152 which are coupled to the inputs and outputs 168-182 of the processors 102. Each connector 158 contains enough pins to allow its two associated processors 102 to input and output data in one direction. For example, a single connector 158 will carry the inputs and outputs designated as 170 and 172. Another connector 158 will carry the inputs and outputs designated as 174 and 176, and so on. Therefore one connector 158 is provided for communication to each of the other array processor modules 150 located to the north, east, south and west. As each of the array processor modules 150 have male connectors 158, connection between neighboring modules 150 is easily facilitated by a short ribbon cable with complementary female connectors (not shown) on each end, for example.

Means for connecting processor inputs 184, 186, 188 and 190 are provided by male connectors 192 on PCB 152. Means for connecting processor outputs 196, 198, 200 and 202 are provided by female connectors 194 mounted directly underneath each connector 192 (only two such connectors 194 are visible in the perspective view of FIG. 13). The placement of connectors 192 and 194 allows for array processor modules 150 to be mounted directly on top of other array processor modules 150. When so connected, the outputs of the processors 102 in the stage above are coupled directly to the inputs of the processors 102 in the stage below, as shown schematically in FIG. 7. It will be appreciated by those skilled in the art that such an arrangement has many advantages. First, a high packing density of the processors 102 in the array 100 is achievable. Second, there is a very high degree of modularity, allowing easy replacement of faulty array processor modules 150, as well as easy construction of an array of any desired size. Third, the array 100 may easily be reconfigured to have more stages if it is desired that each processor 102 execute a longer algorithm routine, if it is desired to have input data arrive at a higher frequency, or if each processor 102 is replaced with a slower device. Fourth, the array 100 may easily be reconfigured to have less stages if it is desired that each processor 102 execute a shorter algorithm routine, if it is desired to have input data arrive at a slower frequency, or if each processor 102 is replaced with a faster processor.

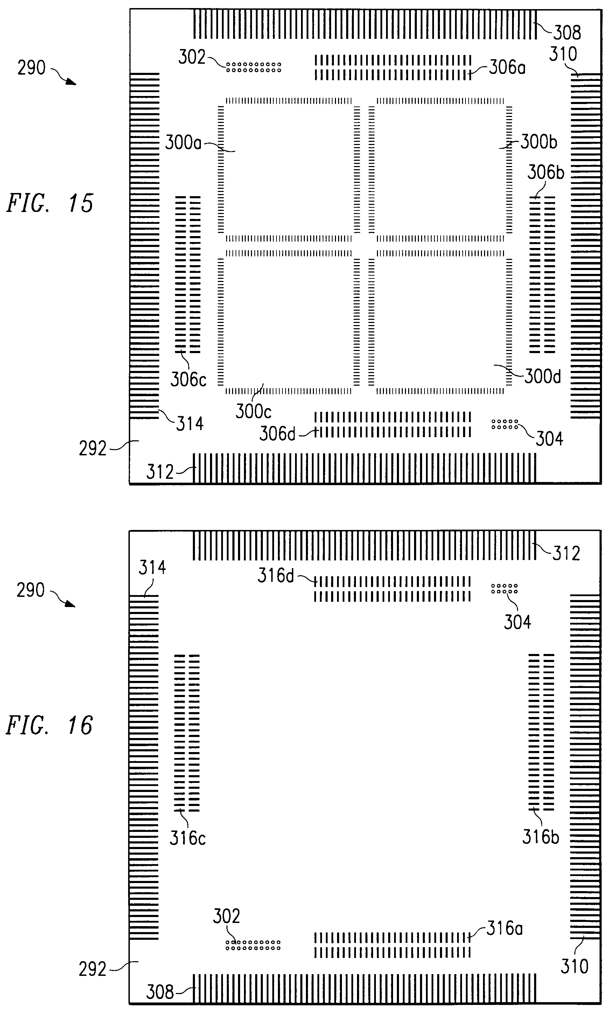

Referring now to FIG. 15, there is illustrated a first preferred implementation of the second preferred embodiment of the present invention, a circuit board for constructing a processor module 290. FIG. 15 shows the mounting pad layout on the top surface of PCB 292. Areas 300a, 300b, 300c and 300d contain surface mount pads for four processor elements (not shown) wherein each processor element contains four processors 102, for a total of 16 processors per module 290. Mounting holes 302 are provided for mounting a connector (not shown) for connection to the UART and control signals. A suitable connector is #87011-610, manufactured by DuPont Electronics. Mounting holes 304 are provided for mounting a connector (not shown) for connection of power supply and ground lines. A suitable connector is # 87011-605, manufactured by DuPont Electronics. Mounting pads 306a, 306b, 306c and 306d are provided for mounting connectors (not shown) for providing input signals to the processors 102, either from the calorimeter 10 trigger towers, or from the outputs of other processor modules 290. Suitable connectors are #87400-130, manufactured by DuPont Electronics. Mounting pads 308, 310, 312 and 314, which are duplicated on the opposite side of circuit board 292, (see FIG. 16) are provided for mounting edge connectors (not shown) which enable coupling from processors 102 in this processor module 290 to processors 102 in neighboring processor modules 290 located, respectively, to the north, east, south and west in the processor array. Such connection may be made by a short length of ribbon cable coupled to such edge connectors. Suitable connectors for mounting to pads 308, 310, 312 and 314 are #PC-3-050-120-X, manufactured by Beta Phase. Unlike connectors 158 of FIG. 13, the edge connectors suitable for use with the board 292 are sexless.

Referring now to FIG. 16, there is illustrated the bottom side of the circuit board 292 of FIG. 15. Mounting pads 316a, 316b, 316c and 316d are provided for mounting connectors (not shown) for providing output signals from the processors 102 which will couple with connectors mounted to pads 306a, 306b, 306c and 306d, respectively, on another processor module 290 or which will be outputs from the processor array. Suitable connectors are #87814-630, manufactured by DuPont Electronics. It will be appreciated by those skilled in the art that the connectors mounted to pads 306a-d must be opposite in sex from those mounted to pads 316a-d, respectively.

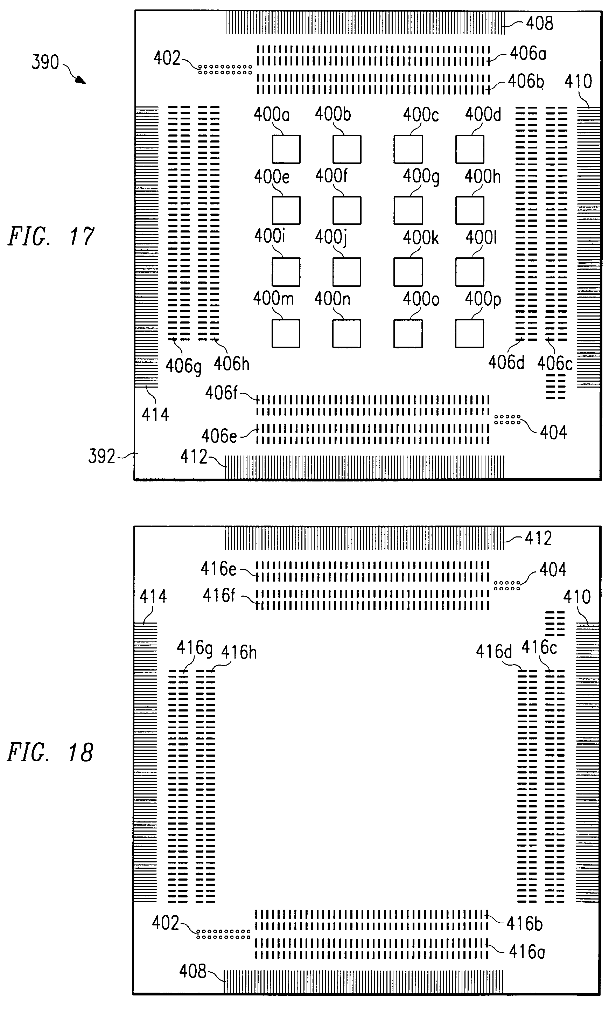

Referring now to FIG. 17, there is illustrated a second preferred implementation of the second preferred embodiment of the present invention, a circuit board for constructing a processor module 390. FIG. 17 shows the mounting pad layout on the top surface of PCB 392. Areas 400a-p contain surface mount pads for sixteen processor elements (not shown) wherein each processor element contains four processors 102, for a total of 64 processors per module 390. Mounting holes 402 are provided for mounting a connector (not shown) for connection to the UART and control signals. A suitable connector is #87011-610, manufactured by DuPont Electronics. Mounting holes 404 are provided for mounting a connector (not shown) for connection of power supply and ground lines. A suitable connector is # 87011-605, manufactured by DuPont Electronics. Mounting pads 406a-h are provided for mounting connectors (not shown) for providing input signals to the processors 102, either from the calorimeter 10 trigger towers, or from the outputs of other processor modules 390. Suitable connectors are #87400-150, manufactured by DuPont Electronics. Mounting pads 408, 410, 412 and 414, which are duplicated on the opposite side of circuit board 392, see FIG. 18) are provided for mounting edge connectors (not shown) which enable coupling from processors 102 in this processor module 390 to processors 102 in neighboring processor modules 390 located, respectively, to the north, east, south and west in the processor array. Such connection may be made by a short length of ribbon cable coupled to such connectors. Suitable connectors for mounting to pads 408, 410, 412 and 414 are #PC-3-025-240-X, manufactured by Beta Phase. Unlike connectors 158 of FIG. 13, the edge connectors suitable for use with the board 392 are sexless.

Referring now to FIG. 18, there is illustrated the bottom side of the circuit board 392 of FIG. 17. Mounting pads 416a-h are provided for mounting connectors (not shown) for providing output signals from the processors 102 which will couple with connectors mounted to pads 406a-h, respectively, on another processor module 390 or which will be outputs from the processor array. Suitable connectors are #87814-650, manufactured by DuPont Electronics. It will be appreciated by those skilled in the art that the connectors mounted to pads 406a-h must be opposite in sex from those mounted to pads 416a-h, respectively.

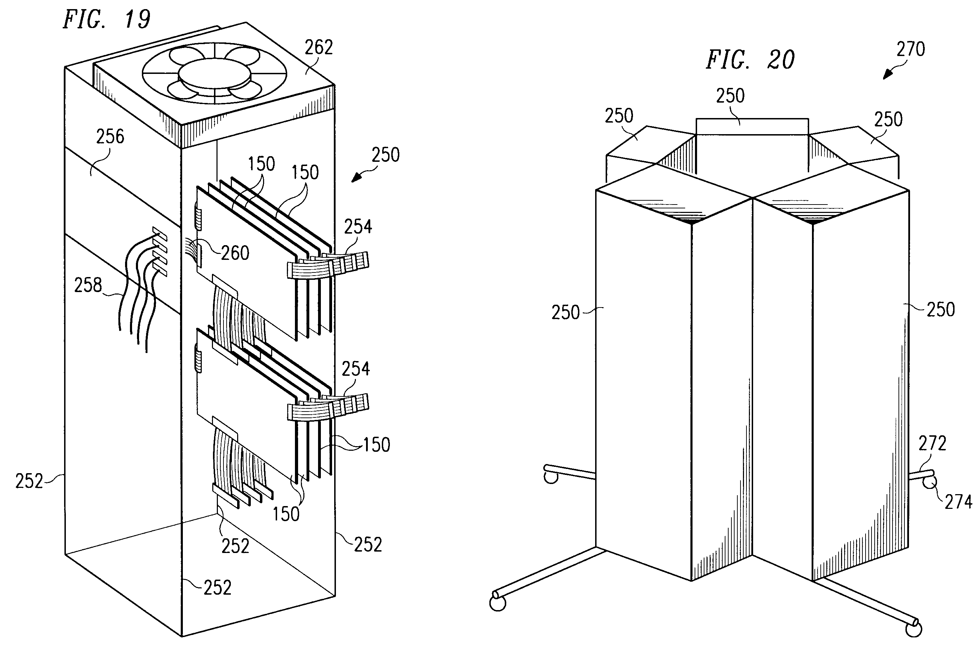

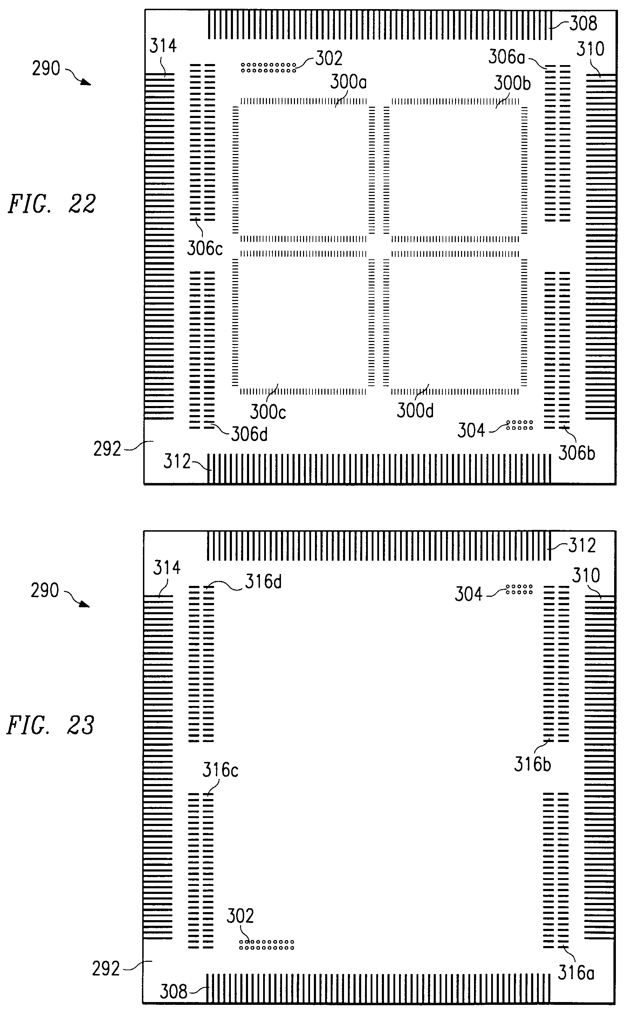

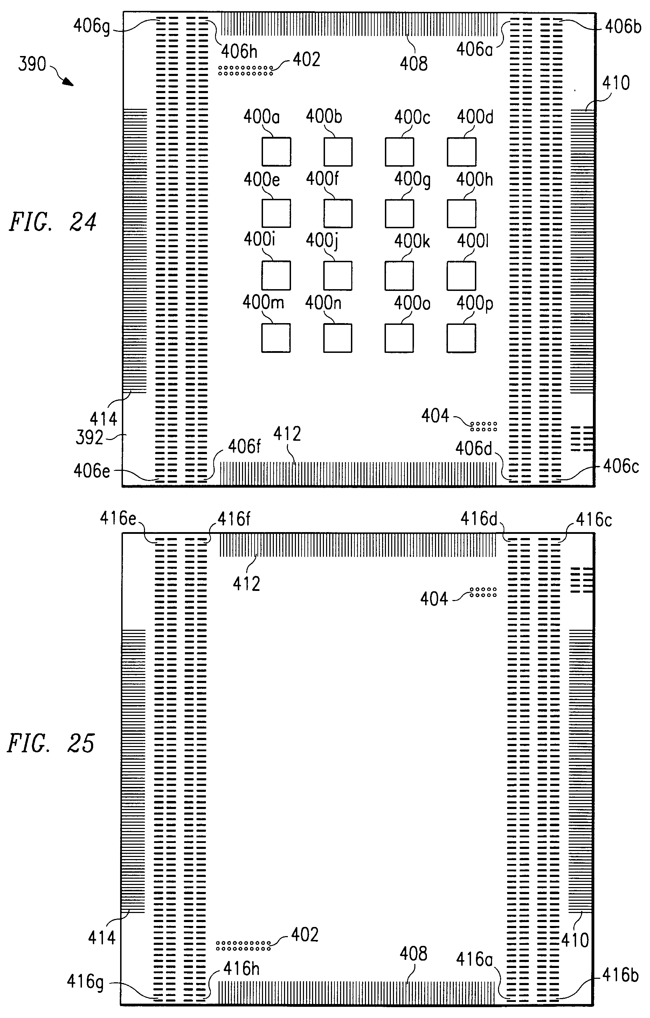

It will be further appreciated that the placement and arrangement of processors and connectors upon the PCB is a matter of design choice and that the present invention comprehends any such placement or arrangement. The various connectors may be of any type and may be placed anywhere on the PCB in relation to the processors and a lesser or greater number of connectors may be used as required, as long as allowance is made for one module to couple directly to another module. For example, FIGS. 22 and 23 illustrate, respectively, a top and bottom view of a circuit board 392 for constructing processor module 290. In FIGS. 22 and 23, the connectors 306a and 306d have been moved to the sides of the board 292 in order to facilitate air flow across the board when the board is mounted in a rack configuration (see FIGS. 19 and 20). Likewise, FIGS. 24 and 25 illustrate, respectively, a top and bottom view of a circuit board 392 for constructing processor module 390. In FIGS. 24 and 25, connectors 406a, 406b, 406e and 406f have been moved to the sides of the board 392 in order to facilitate air flow across the board when the board is mounted in a rack configuration.

Referring now to FIG. 19, there is illustrated a perspective view of a fourth embodiment of the present invention. Mounting frame 250 and one in the bottom is shown with several array processor modules 150 mounted in place. Mounting frame 250 may be constructed of any rigid material, such as aluminum, for example. Members 252 are coupled together to form a three dimensional box suitable for mounting array processor modules 150 thereon, although the present invention comprehends mounting frames 250 of any suitable shape. Array processor modules 150 are mounted to one surface of frame 250 and other modules 150 are stacked up using connectors 192 and 194 on each module 150. Female-to-female ribbon cable assemblies 254 are shown for connection between modules 150 in the same stage of the processor array 100. A board 256 is mounted to the front of frame 250 for connection of the input signals from the calorimeter 10 towers. These connections are preferably made by fiber optic cables 258. Ribbon cable assembly 260 is shown coupling input cables 258 to one of the modules 150. A cooling fan 262 is provided on the top of frame 250 in order to dissipate thermal energy emitted by the processors 102. It will be

EP 0 610 938 A1

appreciated by those skilled in the art that the configuration shown in FIG. 15 represents only a small portion of the entire array and that repetition of the various elements is necessary to complete the array 100 and that several frames 250 may be interconnected to effect this. It will be further appreciated that more than one module 150 may be mounted side-by-side on each frame 250. At least one fan 262 can be mounted to frame 250 to cool the components.

Referring now to FIG. 20, there is illustrated in perspective view a fourth embodiment of the present invention. In the figure, a plurality of mounting frames 250 are shown hingeably connected together to form a continuous ring, indicated generally at 270. Five such frames are shown mounted together, however the present invention comprehends any number of frames 250 so configured. Legs 272 with casters 274 are provided for easy movement of the assembly 270. When FIGS. 15 and 16 are viewed together, it will be appreciated by those skilled in the art that such a configuration allows for array processor modules 150 to be mounted and coupled in a continuous barrel configuration, physically corresponding to the configuration of the calorimeter 10 trigger towers from which the inputs to the array 100 are derived. It will further be appreciated that the number of frames 250 required is proportional to the size of the calorimeter 10 and the tower configuration used (SDC or GEM), as well as the density of processors 102 on the array processor modules 150.

It will be further appreciated by those skilled in the art that array processor modules 150 may also be mounted and coupled in a continuous spherical configuration, physically corresponding to a system generating spherically related input data.

It will be still further appreciated by those skilled in the art that the processor array configuration described herein is not limited only to the applications illustrated herein. Such an array will find useful application in any situation amenable to parallel processing and/or wherever flexible, modular and expandable arrangement of the array components would yield an advantage.

Although preferred embodiments of the invention have been described in the foregoing Detailed Description and illustrated in the accompanying drawings, it will be understood that the invention is not limited to the embodiments disclosed, but is capable of numerous rearrangements, modifications, and substitutions of parts and elements without departing from the spirit of the invention. Accordingly, the present invention is intended to encompass such rearrangements, modifications, and substitutions of parts and elements as fall within the scope of the invention.

**Claims**

1. A three dimensional flow processor, comprising:
   a central processing unit;
   a first plurality of buses coupled to said central processing unit;
   an input data port coupled to at least one of said first plurality of buses; and
   an output data port coupled to at least one of said first plurality of buses, wherein data appearing on said input data port is routed to said output data port if said central processing unit is busy.

2. The three dimensional flow processor of Claim 1, further comprising a second plurality of bidirectional data ports, each of said bidirectional data ports coupled to at least one of said first plurality of buses.

3. The three dimensional flow processor of Claim 1 wherein said input data port routes said input data directly to at least one of said first plurality of buses when a control signal has a first value and uses said input data as an input to a look-up table when said control signal has a second value.

4. The three dimensional flow processor of Claim 2 wherein data may be input from more than one port and output to more than one port during a single clock cycle.

5. A three dimensional flow processor, comprising:
   a central processing unit;
   a first plurality of ring buses coupled to said central processing unit;
   a north data port coupled to at least one of said ring buses for bidirectional communication;
   an east data port coupled to at least one of said ring buses for bidirectional communication;
   a south data port coupled to at least one of said ring buses for bidirectional communication;
   a west data port coupled to at least one of said ring buses for bidirectional communication;
   a top data port coupled to at least one of said ring buses for receiving input data; and
   a bottom data port coupled to at least one of said ring buses for outputting data, wherein said input

16

data appearing at said top data port is routed to said bottom data port if said central processing unit is busy.

6. A parallel processing architecture, comprising:

a first two-dimensional grid of first processing elements, each of said first processing elements having a first input and a first output; and

a second two-dimensional grid of second processing elements, each of said second processing elements having a second input and a second output, wherein each said second input is coupled to a corresponding said first output of a corresponding first processor element, so that an input signal on said first input is passed to said second input if said corresponding first processing element is busy.

7. The parallel processing architecture of Claim 6, wherein:

said first processing elements are capable of bidirectional communication with said first processing elements which are orthogonally adjacent in said first two-dimensional grid; and

said second processing elements are capable of bidirectional communication with said second processing elements which are orthogonally adjacent in said second two-dimensional grid.

8. A parallel processing architecture comprising:

a first plurality of array processor modules, arranged in a first two-dimensional grid, each of said first plurality of array processor modules coupled to a first, second, third and fourth adjoining ones of said first array processor modules for communication therebetween, except for first edge modules of said first plurality of array processor modules located on an edge of said first two-dimensional grid, said first edge modules being coupled only to said first, second and third adjoining ones of said first array processor modules for communication therebetween;

a second plurality of array processor modules, arranged in a second two-dimensional grid, each of said second plurality of array processor modules coupled to a fifth, sixth, seventh and eighth adjoining ones of said second array processor modules for communication therebetween, except for second edge modules of said second plurality of array processor modules located on an edge of said second two-dimensional grid, said second edge modules being coupled only to said fifth, sixth and seventh adjoining ones of said second array processor modules for communication therebetween; and

communication means for enabling communication from each of said second plurality of array processor modules to a corresponding one of said first plurality of array processor modules.

9. The parallel processing architecture of Claim 8 wherein said communication means provides physical attachment of as well as communication capability.

10. The parallel processing architecture of Claim 8 wherein each of said second plurality of array processor modules has an input terminal for receiving data, each of said second plurality of array processor modules passing said data to said corresponding one of said first plurality of array processor modules whenever each of said second plurality of array processor modules is busy.

11. The parallel processing architecture of Claim 8 wherein each of said first and second pluralities of array processor modules comprises:

at least one processor mounted on a first side of a substrate;

at least one connector of a first sex coupled to said at least one processor and mounted on said first side; and

at least one connector of a second sex coupled to said at least one processor and mounted on a second side of said substrate wherein a first one of said array processor modules and a second one of said array processor modules may be interconnected by coupling said at least one connector of a second sex on said first one of said array processor modules to said at least one connector of a first sex on said second one of said array processor modules.

12. The parallel processing architecture of Claim 11 wherein said at least one connector of a first sex is coupled to an input of said at least one processor and said at least one connector of a second sex is coupled to an output of said at least one processor.

FIG. 1

*FIG. 2b*
*(PRIOR ART)*

END CAP

*FIG. 2a*
*(PRIOR ART)*

CALORIMETER CROSS-SECTION

$\Phi$

HADRONIC $H_2$
$H_1$

BARREL

END CAP

$\theta$

12

ELECTROMAGNETIC

18

ELECTROMAGNETIC

$\eta = -\ln(\tan\frac{\theta}{2})$

16

$H_1$
HADRONIC $H_2$

END CAP

20

*FIG. 2d*
*(PRIOR ART)*

$H_2$

$H_1$

$e_{2b}$ $e_{2d}$

$e_{1a}$ $e_{1b}$ $e_{1c}$ $e_{1d}$

$.1\Delta\phi$

$.1\Delta\eta$

TOWER (SDC)

EM HAD

SIMPLIFIED TOWER FOR
1 LEVEL TRIGGER CALCUL

$H_4$
$H_3$
$H_2$
$H_1$

16xHAD

TOWER (GEM)

$EM_1$ $EM_2$

50xEM

$.16\Delta\phi$

$.16\Delta\eta$

ELECTRONS IDENTIFICATION
IN A 3x3 MATRIX

1-BY-2 "EM" SUMS
OR
2-BY-1 "EM" SUMS

+ FRONT
TO-BACK

ISOLATION
JETS IN A 4x4 MATRIX
JETS IN A 8x8 MATRIX

$E_t$

END CAP $1\Delta\phi$

$.1\Delta\eta$ END CAP

BARREL

*FIG. 2c*
*(PRIOR ART)*
END CAP

19

$FIG.\ 3a$
(PRIOR ART)

$FIG.\ 3b$
(PRIOR ART)

EM ⇒

IF ▭ > THRESHOLD

OR

EM ⇒ ▭ > THRESHOLD

THEN

CHECK
FRONT-TO-BACK

THRESHOLD $< C_{em} + I_{em}$ ; $\dfrac{(HAD)}{(EM)} <$ THRESHOLD

4 x 4 SIMPLIFIED TRIGGER TOWER

THEN

CHECK FOR
ISOLATION

THRESHOLD $< C_H + \sum\limits_{i=1}^{3} I_{H_i} + \sum\limits_{i=1}^{12} O_{H_i} + \sum\limits_{i=1}^{12} O_{EM_i}$

$FIG.\ 3c$
(PRIOR ART)

JET
FINDING

THRESHOLD $< \sum\limits_{i=1}^{16} E_{EM_i} + \sum\limits_{i=1}^{16} E_{EH_i}$

20

# FIG. 4
## (PRIOR ART)

FIG. 5
(PRIOR ART)

*FIG. 6*
*(PRIOR ART)*

40

PHASE 1:

42

"em" > THRESHOLD ? — NO

44 YES

SET CODE

PHASE 2:

46

"had"/"em" < THRESHOLD ? — NO

YES

48 SET CODE

PHASE 3:

50

ISOLATED ? — NO

YES

52 SET CODE

54

POSSIBLE JET ? — NO

YES

56 SET CODE

OUTPUT CODE

58

| | |
|---|---|
| 1 | TWO "em" SUM (NORTH 1 x 2) > THRESHOLD |
| 2 | TWO "em" SUM (EAST 2 x 1) > THRESHOLD |
| 4 | "had"/"em" (NORTH 1 x 2) < THRESHOLD |
| 8 | "had"/"em" (EAST 2 x 1) < THRESHOLD |
| 16 | ISOLATION ACHIEVED |
| 32 | POSSIBLE JET FOUND |

23

*FIG. 7*

100

102

STAGE 4

STAGE 3

STAGE 2

STAGE 1

110

105

106

112

102

122

114

104

120

116

*FIG. 8*

118

24

FIG. 9

| STAGE 4 | STAGE 3 | STAGE 2 | STAGE 1 | RAW DATA |

em ⊥ 0 ns
INPUT 1 had

140

ALGORITHM
EXECUTION
TIME

em — 16 ns
INPUT 2 had
INPUT 2

142

em — 32 ns
INPUT 3 had
INPUT 3

INPUT 3

em — 48 ns
INPUT 4 had
INPUT 4

144
INPUT 4
OUTPUT 1

em — 64 ns
INPUT 4
146
OUTPUT 1
INPUT 5 had
OUTPUT 1

OUTPUT 1

em — 80 ns
OUTPUT 2
INPUT 6 had
OUTPUT 2
INPUT 6

OUTPUT 2

em — 96 ns
OUTPUT 3
INPUT 7
INPUT 7
OUTPUT 3
INPUT 7

em — 112 ns
INPUT 8 had
INPUT 8
OUTPUT 4
INPUT 8
INPUT 8
OUTPUT 5

em — 128 ns
INPUT 9 had
OUTPUT 5
OUTPUT 5
OUTPUT 5

em — 144 ns
INPUT 10 had
OUTPUT 6
OUTPUT 6
INPUT 10
OUTPUT 6

em — 160 ns
INPUT 11 had
OUTPUT 7
INPUT 11
OUTPUT 7
INPUT 11

em — 176 ns
INPUT 12 had
INPUT 12
OUTPUT 8
INPUT 12
INPUT 12

192 ns
TIME

TOTAL ARRAY THROUGHOUT TIME

# FIG. 10

**STAGE 1**

```
loop:r1=s=w=n*r                        (1a)
     r2=s=w=n*r15                      (1b)
     nop
     nop
     nop,                   s=n(2a)
     nop,                   s=n(2b)
     nop
     nop
     nop,                   s=n(3a)
     nop,                   s=n(3b)
     nop
     nop
     nop,                   s=n(4a)
     nop,                   s=n(4b)
     r7=r1+n
     alu=alu-r5
     r9=r1+e,               s=n(5a)
     alu=alu-r5,            s=n(5b)

     nop
     r8=r2+n
     bpl north, r10=r2+e    s=n(6a)
     acc=r7*r5              s=n(6b)
     bpl east
     bmi nosend1, acc=acc-r8
     acc=r9+r5,             s=n(7a)
     acc=acc-r8             s=n(7b)
     nop
north:nop,                  s=n(7a)
     nop,                   s=n(7b)
     nop
     nop
     nop,                   s=n(8a)
     nop,                   s=n(8b)
     nop
     nop
     bmpl sendn             s=n(9a)
     bmmi nosend2           s=n(9b)
     nop
     nop
     nop                    s=n(10a)
east:nop
     nop
```

**STAGE 11**

```
loop:r1=s=w=n*,,4                   (11a)   0
     r2=s=w=n*r15                   (11b)   1
     nop,                   s=n(1c)         2
     nop                    s=n(1d)         3
     nop                                    4
     nop                                    5
     nop,                   s=n(2c)         6
     nop,                   s=n(2d)         7
     nop                                    8
     nop                                    9
     nop,                   s=n(3c)        10
     nop,                   s=n(3d)        11
     nop                                   12
     nop                                   13
     r9=r1+e,               s=n(4c)        14
     alu=alu-r5             s=n(4d)        15
     r7=r1+n                               16
     alu=alu-r5                            17

     nop,                   s=n(5c)        18
     r10=r2+e               s=n(5d)        19
     bpl east, r8=r2+e                     20
     acc=r9*r5                             21
     bpl north,             s=n(6c)        22
     bmi nosend1, acc=acc-r8 s=n(6d)       23
     acc=r7*r5                             24
     acc=acc-r8                            25
     nop,                   s=n(7c)        26
east:nop                                   24
     nop                                   25
     nop,                   s=n(7c)        26
     nop,                   s=n(7d)        27
     nop                                   28
     nop                                   29
     nop,                   s=n(8c)        30
     nop,                   s=n(8d)        31
     nop                                   32
     nop                                   33
     nop,                   s=n(9c)        34
     nop,                   s=n(9d)        35
     nop                                   36
north:nop,                  s=n(7c)        26
     nop,                   s=n(7d)        27
```

## FIG. 10
### (cont'd)

```
43        nop,          s=n(8a)          nop                            28
44        nop,          s=n(8b)          nop                            29
45        nop                            nop,          s=n(8c)   30
46        nop                            nop,          s=n(8d)   31
47        nop,          s=n(9a)          nop                            32
48        nop           s=n(9b)          nop                            33
49        bmpl sende                     bmpl sendn,   s=n(9c)   34
50        bmmi nosend3                   bmmi nosend3  s=n(9d)   35
51        nop           s=n(10a)         nop                            36
52        nop           s=n(10b)         nop                            37
53        nop                            nop,          s=n(10c)  38
54  sndn: nop,          s=n(10a)  sende: nop                            36
55        nop,          s=n(10b)         nop                            37
56        nop                            nop,          s=n(10c)  38
57        nop                            nop,          s=n(10d)  39
48        bra loop,     s=n(11a)         bra loop                       40
49        nop,          s=n(11b)         nop                            41
50        s=23                           s=23          (11c)     42
51        s=r7                           s=r79         (11d)     43
52  sende: nop                     sendn: nop,         s=n(10c)  38
53        nop                            nop,          s=n(10d)  39
54        bra loop,     s=n(11a)         bra loop                       40
55        nop,          s=n(11b)         nop           (11c)     41
56        s=23,                          s=23          (11d)     42
57        s=r9                           s=r7                           43
58 nosend1: nop                   nosend1: nop         ,s=n(7d)  27
59        nop,          s=n(8a)          nop                            28
60        nop,          s=n(8b)          nop                            29
61        nop                            nop,          s=n(8c)   30
62        nop                            nop,          s=n(8d)   31
63        nop,          s=n(9a)          nop                            32
64        nop,          s=n(9b)          nop                            33
65        nop                            nop,          s=n(9c)   34
66        nop                            nop,          s=n(9d)   35
67        nop,          s=n(10a)         nop                            36
68 nosend2: nop,        s=n(10b) nosend2: nop                          37
69        nop                            nop,          s=n(10c)  38
70 nosend1: nop                   nosend3: nop,        s=n(10d)  39
71        bra loop,     s=n(11a)         bra loop                       40
72        nop,          s=n(11b)         nop                            41
73        s=0           (1c)             s=0           (11c)     42
74        s=0           (1d)             s=0           (11d)     43
```

27

*FIG. 11*

FIG. 12

| .cell 0,1,2 | STAGE 4 | STAGE 3 | STAGE 2 | STAGE 1 | |
|---|---|---|---|---|---|
| loop:r1=s=w=t*r14 | (4a) | (3a) | (2a) | (1a) | ;receive "em" value from calorimeter |
| r2=s=w=t*r15 | (4b) | (3b) | (2b) | (1b) | ;receive "had" value from calorimeter |
| r7=r1+n, | b=t(1c) | | | | ;north 1x2 "em" sum |
| r8=r2+n, | b=t(1d) | | | | ;north 1x2 "had" sum |
| r9=r1+e | b=t(4a) | b=t(3a) | b=t(2a) | | ;east 2x1 "em" sum |
| r10=r2+e | b=t(4b) | b=t(3b) | b=t(2b) | | ;east 2x1 "had" sum |
| alu=r7-r5, | b=t(2c) | b=t(1c) | | | ;compare 1x2 "em" sum to Threshold |
| bpl north, | b=t(2d) | b=t(1d) | | | |
| alu = r9-r5, | | | b=t(4a) | b=t(3a) | ;compare 2x1 "em" sum to Threshold |
| bpl east | | | b=t(4b) | b=t(3b) | |
| bra nosend, | b=t(3c) | b=t(2c) | b=t(1c) | | |
| north:acc=r7*r5 | , | | b=t(4a) | b=t(3a) | ;"em" * Threshold (1x2) |
| acc=acc-r8, | | | b=t(4b) | b=t(3b) | "em" * Threshold-"had" |
| bmpl sendn, | b=t(3c) | b=t(2c) | b=t(1c) | | |
| bra nosend2, | b=t(3d) | b=t(2d) | b=t(1d) | | |
| east:acc=r9*r5, | b=t(3c) | b=t(2c) | b=t(1c) | | ;"em" * Threshold (2x1) |
| acc=acc-r10, | b=t(3d) | b=t(2d) | b=t(1d) | | ;"em" * Threshold-"had" |
| bmpl sende | , | | | b=t(4a) | |
| bra nosend3, | | | | b=t(4b) | |
| sendn:nop, | b=t(3d) | b=t(2d) | b=t(1d) | | |
| nop, | | | | b=t(4a) | |
| nop, | | | | b=t(4b) | |
| b=23 | (4c) | (3c) | (2c) | (1c) | ;send out tower id |
| b=r7, bra loop | (4d) | (3d) | (2d) | (1d) | ;send out 1x2 "em" energy |
| sende:nop, | | | | b=t(b) | |
| b=23 | (4c) | (3c) | (2c) | (1c) | ;send out tower id |
| b=r9, bra loop | (4d) | (3d) | (2d) | (1d) | ;send out 2x1 "em" energy |
| nosend1:nop, | | | b=t(1d) | | |
| nosend2:nop | , | | | b=t(4) | |
| nop, | | | | b=t | |
| nosend3:b=0 | (4c) | (3c) | (2c) | (1c) | ;send out null value |
| b=0, bra loop | (4d) | (3d) | (2d) | (1d) | ;send out null value |
| .end | | | | | |

EP 0 610 938 A1

FIG. 13

FIG. 14

FIG. 15

FIG. 16

FIG. 17

FIG. 18

FIG. 19

FIG. 20

EP 0 610 938 A1

FIG. 21a

TOP

NORTH

WEST

SOUTH

EAST

BOTTOM

UART
702
700
642
643
644
645
RESET
WATCHDOG
CLOCK

LOOK-UP TABLE 256x12 BIT

MUX + REG

HAND SHAKE

8x12 BIT FIFO

MUX

8x12 BIT FIFO

HAND SHAKE

8x12 BIT FIFO

HAND SHAKE

MUX + REG

HOST INTERFACE

REGISTERS FILE 32x12 BIT

PROGRAM 64x50-BIT STATIC RAM

MUX

MAC HI MID LO

MUX MUX

ALU

ACC

MUX + REG

HAND SHAKE

8x12 BIT FIFO

MUX + REG

HAND SHAKE

8x12 BIT FIFO

HAND SHAKE

MUX + REG

TO FIG. 21b

TO FIG. 21b

TO FIG. 21c

TO FIG. 21c

34

*FIG. 21b*

FIG. 21c

*FIG. 21d*

FIG. 22

FIG. 23

38

FIG. 24

390

406g  406h  402  408  406a  406b  410

400a  400b  400c  400d

400e  400f  400g  400h

400i  400j  400k  400l

400m  400n  400o  400p

414  404
392  412
406e  406f  406d  406c

FIG. 25

416e  416f  416d  416c

412  404

414  402  410
416g  416h  408  416a  416b

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PROCEEDINGS OF THE THIRD INTERNATIONAL CONFERENCE ON CALORIMETRY IN HIGH ENERGY PHYSICS 29 September 1992 , CORPUS CHRISTI, USA pages 553 - 566 D. CROSETTO 'Programmable level-1 trigger for calorimeter' * the whole document * | 1-11 | G06F15/80 G06F15/16 |
| A | EP-A-0 270 198 (THINKING MACHINES CORP) 8 June 1988 * the whole document * | 1,5 | |
| A | WO-A-91 19258 (WAVETRACER INC) 12 December 1991 * the whole document * | 1,5,6,8 | |
| | | | **TECHNICAL FIELDS SEARCHED** (Int.Cl.5) |
| | | | G06F |

The present search report has been drawn up for all claims

| Place of search | Date of completion of the search | Examiner |
|---|---|---|
| THE HAGUE | 9 June 1994 | Michel, T |